(19) Europäisches Patentamt
European Patent Office
Office européen des brevets

(11) Veröffentlichungsnummer: **0 103 095**
**B1**

(12) **EUROPÄISCHE PATENTSCHRIFT**

(45) Veröffentlichungstag der Patentschrift: **29.08.90**

(21) Anmeldenummer: **83106637.8**

(22) Anmeldetag: **07.07.83**

(51) Int. Cl.$^5$: **C 09 B 1/58,** C 09 B 1/503, C 09 B 1/22, C 09 B 1/62, C 09 K 19/60

# (54) Dichroitisches Material, enthaltend Anthrachinonfarbstoffe.

(30) Priorität: **17.07.82 DE 3226843**
**21.04.83 DE 3314467**

(43) Veröffentlichungstag der Anmeldung:
**21.03.84 Patentblatt 84/12**

(45) Bekanntmachung des Hinweises auf die Patenterteilung:
**29.08.90 Patentblatt 90/35**

(84) Benannte Vertragsstaaten:
**CH DE GB LI**

(56) Entgegenhaltungen:
**EP-A-0 069 910**
**EP-A-0 074 523**
**BE-A- 676 628**
**CH-A- 369 741**
**CH-A- 430 919**
**CH-A-1 596 161**
**DE-A-2 029 793**
**FR-A- 82 238**
**FR-A-1 446 826**
**FR-A-2 274 602**
**FR-A-2 366 336**
**FR-A-2 444 702**
**GB-A- 905 449**
**GB-A- 990 290**
**GB-A-2 043 097**
**GB-A-2 082 196**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Blunck, Martin, Dr.**
**Steegerstrasse 7**
**D-5000 Köln 80 (DE)**
Erfinder: **Claussen, Uwe, Dr.**
**Carl-Rumpff-Strasse 29**
**D-5090 Leverkusen 1 (DE)**
Erfinder: **Kröck, Friedrich Wilhelm**
**Ackerstrasse 45**
**D-5068 Odenthal (DE)**
Erfinder: **Neeff, Rütger, Dr.**
**Berta-von-Suttner-Strasse 22**
**D-5090 Leverkusen 1 (DE)**

(56) Entgegenhaltungen:
**F.Funes et al.: FSDC 10 (1979), 352**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 103 095 B1**

**Beschreibung**

Die Erfindung betrifft dichroitisches Material, vorzugsweise in Form flüssigkristalliner Phasen, enthaltend mindestens einen Anthrachinonfarbstoff der Formel

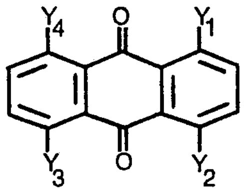

(I)

in der

$Y_1$, $Y_2$, $Y_3$, $Y_4$ für folgende Viererkombinationen stehen:

| $Y_1$ | $Y_2$ | $Y_3$ | $Y_4$ |
|---|---|---|---|
| S-Ar | S-Ar | S-Ar | $NH_2$ |
| S-Ar | S-Ar | S-Ar | OH |
| S-Ar | S-Ar | S-Ar | Hal |
| S-Ar | S-Ar | $NH_2$ | $NH_2$ |
| S-Ar | $NH_2$ | $NH_2$ | S-Ar |
| $S\text{-}Ar_2$ | $NH_2$ | $S\text{-}Ar_2$ | $NH_2$ |
| S-Ar | S-Ar | $NH_2$ | OH |
| S-Ar | $NH_2$ | OH | S-Ar |
| S-Ar | $NH_2$ | S-Ar | OH |
| S-Ar | S-Ar | $NH_2$ | Hal |
| S-Ar | $NH_2$ | Hal | S-Ar |
| S-Ar | $NH_2$ | S-Ar | Hal |
| S-Ar | S-Ar | $NH_2$ | $NO_2$ |
| S-Ar | $NH_2$ | $NO_2$ | S-Ar |
| S-Ar | $NH_2$ | S-Ar | $NO_2$ |
| S-Ar | S-Ar | $NH_2$ | H |
| S-Ar | $NH_2$ | H | S-Ar |
| S-Ar | $NH_2$ | S-Ar | H |
| S-Ar | S-Ar | OH | OH |

| $Y_1$ | $Y_2$ | $Y_3$ | $Y_4$ |
|---|---|---|---|
| S-Ar | OH | OH | S-Ar |
| S-Ar | OH | S-Ar | OH |
| S-Ar | S-Ar | OH | Hal |
| S-Ar | OH | S-Ar | Hal |
| S-Ar | S-Ar | OH | H |
| S-Ar | OH | H | S-Ar |
| S-Ar | OH | S-Ar | H |
| S-AR | S-Ar | Hal | Hal |
| S-Ar | Hal | S-Ar | Hal |
| S-Ar | S-Ar | Hal | H |
| S-Ar | Hal | H | S-Ar |
| S-Ar | Hal | S-Ar | H |
| S-Ar | S-Ar | $NO_2$ | H |
| S-Ar | $NO_2$ | S-Ar | H |
| S-Ar | $NH_2$ | $NH_2$ | $NH_2$ |
| S-Ar | $NH_2$ | $NH_2$ | OH |
| S-Ar | OH | $NH_2$ | $NH_2$ |
| S-Ar | $NH_2$ | OH | $NH_2$ |
| S-Ar | $NH_2$ | $NH_2$ | Hal |
| S-Ar | Hal | $NH_2$ | $NH_2$ |
| S-Ar | $NH_2$ | Hal | $NH_2$ |
| S-Ar | $NH_2$ | $NH_2$ | $NO_2$ |
| S-Ar | $NO_2$ | $NH_2$ | $NH_2$ |
| S-Ar | $NH_2$ | $NO_2$ | $NH_2$ |
| S-Ar | $NH_2$ | $NH_2$ | H |
| S-Ar | H | $NH_2$ | $NH_2$ |
| S-Ar | $NH_2$ | H | $NH_2$ |
| S-Ar | $NH_2$ | OH | OH |
| S-Ar | OH | OH | $NH_2$ |
| S-Ar | OH | $NH_2$ | OH |
| S-Ar | $NH_2$ | OH | Hal |
| S-Ar | Hal | OH | $NH_2$ |

| $Y_1$ | $Y_2$ | $Y_3$ | $Y_4$ |
|---|---|---|---|
| S-Ar | $NH_2$ | Hal | OH |
| S-Ar | OH | $NH_2$ | Hal |
| S-Ar | OH | Hal | $NH_2$ |
| S-Ar | Hal | $NH_2$ | OH |
| S-Ar | $NO_2$ | OH | $NH_2$ |
| S-Ar | $NH_2$ | $NO_2$ | OH |
| S-Ar | OH | $NO_2$ | $NH_2$ |
| S-Ar | $NO_2$ | $NH_2$ | OH |
| S-Ar | $NH_2$ | OH | H |
| S-Ar | H | OH | $NH_2$ |
| S-Ar | $NH_2$ | H | OH |
| S-Ar | OH | $NH_2$ | H |
| S-Ar | OH | H | $NH_2$ |
| S-Ar | H | $NH_2$ | OH |
| S-Ar | $NH_2$ | Hal | Hal |
| S-Ar | Hal | Hal | $NH_2$ |
| S-Ar | Hal | $NH_2$ | Hal |
| S-Ar | $NO_2$ | Hal | $NH_2$ |
| S-Ar | $NH_2$ | $NO_2$ | Hal |
| S-Ar | Hal | $NO_2$ | $NH_2$ |
| S-Ar | $NO_2$ | $NH_2$ | Hal |
| S-Ar | $NH_2$ | Hal | H |
| S-Ar | H | Hal | $NH_2$ |
| S-Ar | $NH_2$ | H | Hal |
| S-Ar | Hal | $NH_2$ | H |
| S-Ar | Hal | H | $NH_2$ |
| S-Ar | H | $NH_2$ | Hal |
| S-Ar | $NH_2$ | H | $NO_2$ |
| S-Ar | $NO_2$ | $NH_2$ | H |
| S-Ar | H | $NH_2$ | $NO_2$ |
| $S-Ar_2$ | $NH_2$ | H | H |
| S-Ar | H | H | $NH_2$ |
| S-Ar | H | $NH_2$ | H |
| S-Ar | OH | $NO_2$ | OH |

| $Y_1$ | $Y_2$ | $Y_3$ | $Y_4$ |
|---|---|---|---|
| S-Ar | OH | OH | H |
| S-Ar | H | OH | OH |
| S-Ar | OH | H | OH |
| S-Ar | OH | $NO_2$ | Hal |
| S-Ar | Hal | $NO_2$ | OH |
| S-Ar | OH | Hal | H |
| S-Ar | H | Hal | OH |
| S-Ar | OH | H | Hal |
| S-Ar | Hal | OH | H |
| S-Ar | Hal | H | OH |
| S-Ar | H | OH | Hal |
| S-Ar | OH | $NO_2$ | H |
| S-Ar | $NO_2$ | OH | H |
| S-Ar | OH | H | H |
| S-Ar | H | OH | H |
| S-Ar | Hal | $NO_2$ | Hal |
| S-Ar | Hal | $NO_2$ | H |
| S-Ar | Hal | H | H |
| S-Ar | H | Hal | H |

Ar, $Ar_2$ einen Phenyl-, Pyridyl-, Imidazolyl(2)-, 1,2,4-Triazolyl(3)-, Thienyl, Naphthyl-, Dihydronaphthyl-, Tetrahydronaphthyl-, Indanyl-, Indenyl-, Indolyl, Benzofuranyl-, Chromanyl-, Chinolyl-, Anthracenyl-, Carbazolyl-, Dibenzofuranyl-, Dihydroanthracenyl-, Fluorenyl-, Acenaphthenyl-, Phenanthrenyl-, Biphenylyl-, Terphenylyl-, 4-Cyclohexylphenyl-, 4-Cyclopentyl-phenyl-, 4-Cyclohexylbiphenyl und 4-(4-Phenyl-cyclohexyl)-phenyl- Rest bezeichnen, wobei die genannten Reste durch Alkyl, Cycloalkyl, Aralkyl, Trifluormethyl, Aryl, Halogen, Alkoxy oder —COOT substituiert sein können, und wobei für den Fall, daß $Ar_2$ Phenyl ist, dieser Rest substituiert sein muß,

Hal, Chlor, Brom oder Fluor bezeichnet und

T für einen organischen Rest steht.

Bevorzugt ist dichroitisches Material enthaltend mindestens einen Anthrachinonfarbstoff der Formel (I), bei der Ar, $Ar_2$ einen Phenyl-, Naphthyl-, Indanyl- oder Tetrahydronaphthyl- Rest bezeichnen, insbesondere einen solchen Anthrachinonfarbstoff der Formel (I), bei der Ar, $Ar_2$ einen gegebenenfalls durch $C_1$—$C_4$-Alkyl, insbesondere Methyl und tert.-Butyl, Halogen, insbesondere Fluor und Chlor oder —COOT substituierten Aryl-, insbesondere Phenylrest, bezeichnen.

Das dichroitische Material enthält üblicherweise 0,01 bis 30 Gew.-%, vorzugsweise 0,1 bis 10 Gew.-%, an Anchrachinonfarbstoff der Formel (I).

Alkyl bezeichnet vorzugsweise $C_1$—$C_7$-Alkyl. Cycloalkyl steht bevorzugt für $C_3$—$C_7$-Cycloalkyl.

Aralkyl bezeichnet bevorzugt Phenyl- oder Naphthyl-$C_1$—$C_4$-Alkyl.

Halogen ist bevorzugt Fluor, Chlor, Brom.

Alkoxy steht vorzugsweise für $C_1$—$C_6$-Alkoxy.

T steht bevorzugt für einen $C_1$—$C_8$-Alkylrest, dessen C-Kette durch O und/oder S unterbrochen sein kann und der durch Halogen, Hydroxy, $C_1$—$C_4$-Alkoxy, Cycloalkyl, insbesondere Cyclopentyl und Cyclohexyl, Aryl, insbesondere Phenyl, gegebenenfalls substituiertes Aryl, insbesondere gegebenenfalls substituiertes Phenyl, substituiert sein kann oder für gegebenenfalls substituiertes Aryl, insbesondere gegebenenfalls substituiertes Phenyl.

Die Farbstoffe erfüllen folgende Bedingungen:

$$Z>0{,}65$$
$$W = \ln(Z + 0{,}5) - \ln(0{,}85 - Z),$$

wobei W die Summe aus dem Grundwert 1,75 für unsubstituiertes Anthrachinon ($Y_1=Y_2=Y_3=Y_4=H$) und den Substituenteninkrementen, die für H 0,00, Hal −0,10, $-NH_2$ + 0,10, —OH −0,13, —SAr +0,38 und $-NO_2$ + 0,04 betragen, ist, und Z nach der obigen Formel berechnet wird.

Von den vorstehend genannten Verbindungen werden solche zum Einsatz in dichroitischem Material bevorzugt, bei denen der Grundwert 1,62 und die Inkremente für H 0,00, Hal −0,24, $-NH_2$ +0,09, —OH −0,11, —SAr +0,35 und $-NO_2$ −0,05 betragen, wobei wie zuvor gilt, daß

$$Z>0{,}65$$
$$W = \ln(Z + 0{,}5) - \ln(0{,}85 - Z),$$

wobei W die Summe aus dem Grundwert und den Substituenteninkrementen darstellt und Z nach der obigen Formel berechnet wird.

Die Herstellung der Verbindungen der Formel (I) erfolgt nach an sich bekannten Verfahren, wie sie z.B. in Houben-Weyl, Methoden der organischen Chemie, 4. Aufl. 1979, G. Thieme Verlag, Stuttgart, Band 7/3c beschrieben sind.

Die Einführung des Arylthiorestes erfolgt durch Umsetzung eines entsprechenden Halogen- oder Nitro-anthrachinons oder der entsprechenden Anthrachinonsulfonsäure mit einem entsprechenden Thiophenol in einem organischen Lösungsmittel, z.B. in einem Alkohol, in Dimethylformamid, Dimethylsulfoxid oder N-Methylpyrrolidon oder bei der Umsetzung einer Anthrachinonsulfonsäure auch in Wasser, in Gegenwart von säurebindenden Mitteln wie Alkali- oder Erdalkalimetallcarbonaten, -hydroxiden, -oxiden oder -acetaten oder in Gegenwart von organischen säurebindenden Mitteln wie Triethylamin. Dabei reagieren Nitrogruppen bei geeigneten Reaktionsbedingungen häufig bevorzugt, so daß sich bei manchen Nitro-halogen-anthrachinonen die Reaktion so führen läßt, daß nur die Nitrogruppen ausgetauscht werden.

Die Aminogruppen werden in bekannter Weise entweder durch Reduktion einer Nitrogruppe oder durch Tosylamidschmelze eines entsprechenden Halogenanthrachinons mit nachfolgender Spaltung eingeführt. In Dinitroanthrachinonen wie z.B. in 1,5-Dinitro-4,8-dihydroxy-anthrachinon lassen sich die Nitrogruppen häufig stufenweise austauschen oder reduzieren, so daß die verbleibende Nitrogruppe weiteren Reaktionen zugänglich ist.

Eine besonders bevorzugte Gruppe sind die Amino-arylthio-anthrachinone. Eine Reihe dieser Verbindungen kann durch Austausch von Halogenatomen durch die Arylthiogruppe hergestellt werden. Geeignete Halogen-amino-anthrachinone, wie 1-Amino-5-chlor- und 1-Amino-8-chlor-anthrachinon erhält man z.B. dadurch, daß man die Nitrierungsprodukte von Anthrachinon-1-sulfonsäure einer "Fischerungsreaktion" mit anschließender Reduktion der Nitrogruppe unterwirft (vgl. die Vorschriften in Houben-Weyl, Band 7/3c, S. 58; Reduktion von 1-Nitro-5-chlor- bzw. -8-chlor-anthrachinon: vgl. Houben-Weyl, Band 7/3c, S. 159).

Auch die Chlorierung (bzw. auch Bromierung, die zu entsprechenden Bromderivaten führt) von 1-Benzoylamino-anthrachinon oder von 1-Benzoylamino-5-chlor-, -8-chlor- oder -5,8-dichlor-anthrachinon, bei der nur die p-Stellung zur 1-Benzoylaminogruppe halogeniert wird, so daß man durch Abspaltung der Benzoylaminogruppe in heißer Schwefelsäure glatt 1-Amino-4-chlor- (vgl. BIOS 1484, S. 15/16), 1-Amino-4,5-dichlor-, -4,8-dichlor- und -4,5,8-trichloranthrachinon (CH—PS 164 842) erhält, führt zu geeigneten austauschfähigen Produkten.

Statt durch Benzoylierung der Aminogruppe die Halogenierung der 2-Stellung zu verhindern, kann eine weitgehend selektive p-Monochlorierung (bzw. -bromierung) auch dadurch erreicht werden, daß man die Aminogruppe durch Einwirkung von Dimethylformamid und Thionylchlorid in eine Dimethylformamidiniumgruppe überführt und dann in schwachem Oleum halogeniert (DE—AS 1 228 274); man erhält so dieselben Amino-chlor-anthrachinone wie zuvor. Außerdem gelingt so auch die Herstellung von 1,5-Diamino-4,8-dibrom- und 1,8-Diamino-4,5-dibrom-anthrachinon (DE—AS 1 228 274), in denen ebenfalls das Halogen gegen den Arylthiorest austauschbar ist.

1-Amino-4,5- und -4,8-dichlor-anthrachinon sind auch durch Nitrierung von 1,8- und 1,5-Dichloranthrachinon und anschließende Reduktion der Nitrogruppe mit Eisen in Schwefelsäure oder mit Schwefel in Oleum zugänglich.

Durch Chlorierung von 1-Amino-anthrachinonen in Oleum lassen sich leicht die ebenfalls in die Austauschreaktion einsetzbaren 1-Amino-5,8-dichlor- und 1-Amino-4,5,8-trichlor-anthrachinone herstellen (DE—AS 1 151 517 und DE—AS 1 154 490). Chlorierung des 1,4-Diamino-anthrachinon-Borsäurekomplexes ergibt das gleichfalls geeignete 1,4-Diamino-5,8-dichlor-anthrachinon (DE—AS 1 199 279).

Auch die aus 1,4,5-Triamino-anthrachinon und aus 1-Amino-5- bzw. -8-nitro-anthrachinon herstellbaren Benzoyl-amino-anthrachinone können in der oben beschriebenen Weise (analog BIOS 1484, S. 15/16) chloriert und gespalten werden. Man kann so 1,4,5-Triamino-8-chlor-anthrachinon und nach Reduktion der Nitrogruppen in den beiden letztgenannten Produkten 1,5-Diamino- bzw. 1,8-Diamino-4-chlor-anthrachinon zugänglich machen, die ebenfalls in die Austauschreaktion mit Thiophenolen eingesetzt werden können. 1,5-Diamino- und 1,8-Diamino-4-chlor-anthrachinon können auch aus den bekannten 1-Amino-5- und -8-benzoylamino-anthrachinon durch Chlorierung in Oleum und nachfolgende Abspaltung der Benzoylgruppe hergestellt werden.

Einige der Farbstoffe lassen sich auch durch Austausch von Nitrogruppen gegen den Arylthiorest herstellen.

Geeignete Amino-nitro-anthrachinone sind z.B. 1-Amino-5- und -8-nitroanthrachinon (herstellbar aus den Dinitroverbindungen durch partielle Reduktion: DE—PS 147 851 und DE—PS 473 871), 1,5-Diamino-4,8-dinitro- und 1,8-Diamino-4,5-dinitro-anthrachinon (herstellbar aus den Bis-dimethylformamidiniumsalzen des 1,5- bzw. 1,8-Diamino-anthrachinon durch Nitrierung und Schutzgruppenabspaltung: DE—AS 1 221 240) und 1,4-Diamino-5-nitroanthrachinon (herstellbar durch Nitrierung des cyclischen Bis-sulfimids des 1,4-Diamino-anthrachinons und Abspaltung der Bis-sulfimidgruppen: BIOS 1484, 20).

Eine zweite besonders bevorzugte Gruppe von Farbstoffen sind die Hydroxy-arylthio-anthrachinon. Eine Reihe dieser Verbindungen kann durch Austausch von Halogenatomen durch die Arylthiogruppe hergestellt werden. Geeignete Halogen-hydroxy-anthrachinone lassen sich prinzipiell durch Diazotierung und "Verkochung" der vorerwähnten Halogen-amino-anthrachinone herstellen (Houben-Weyl, Band 7/3c, S. 103), wie es z.B. für die Herstellung von 1-Hydroxy-5,8-dichlor-anthrachinon beschrieben ist (GB—PS 1 029 448). Eine andere Möglichkeit zur Herstellung geeigneter Halogen-hydroxy-anthrachinone besteht in der Chlorierung von Hydroxyanthrachinonen. So gelingt die Chlorierung von Chinizarin glatt, wenn man in Oleum in Gegenwart von Borsäure und Jod arbeitet; man erhält 1,4-Dihydroxy-5,8-dichlor-anthrachinon.

Einige Farbstoffe dieser Gruppe lassen sich auch durch Austausch von Nitrogruppen in Hydroxy-nitroanthrachinonen gegen Arylthioreste herstellen. Einige geeignete Hydroxy-nitro-anthrachinone sind bekannte großtechnische Produkte wie 1,5-Dihydroxy-4,8-dinitro- und 1,8-Dihydroxy-4,5-dinitro-anthrachinon. Nitrierung von 1-Hydroxyanthrachinon ergibt hauptsächlich 1-Hydroxy-4-nitro-anthrachinon (Houben-Weyl, Band 7/3c, S. 127), Behandlung von 1,5-Dichlor-anthrachinon mit Natriumnitrit in Dimethylformamid liefert 1-Hydroxy-5-nitro-anthrachinon und ebenso erhält man aus 1,5-Dichlor-4,8-dinitro-anthrachinon das 1-Hydroxy-4,5,8-trinitro-anthrachinon (DE—PS 842 793) und aus 1,4-Dihydroxy-5,8-dichlor-anthrachinon das 1-Nitro-4,5,8-trihydroxy-anthrachinon (DE—OS 2 227 766), durch Bromierung von 1-Hydroxy-5-nitro-anthrachinon läßt sich 1-Hydroxy-4-brom-5-nitro-anthrachinon erhalten (Houben-Weyl, Band 7/3c, S. 122), in dem beide, die Nitrogruppe und das Bromatom, austauschfähig sind, und aus dem Einwirkungsprodukt von Thionylchlorid auf Chinizarin läßt sich durch Nitrieren in Schwefelsäure in Gegenwart von Borsäure 5-Nitro-1,4-dihydroxy-anthrachinon herstellen (GB—PS 1 130 499).

Eine dritte, besonders bevorzugte Gruppe von Farbstoffen sind die Amino-hydroxy-arylthio-anthrachinone. Farbstoffe dieses Typs können z.B. durch Austausch von Halogenatomen durch die Arylthiogruppe hergestellt werden. Geeignete Amino-hydroxy-halogen-anthrachinone sind beispielsweise durch eine Borsäure-Schwefelsäure-Schmelze aus Amino-di- und -trichlor-anthrachinonen zugänglich. So läßt sich aus 1-Amino-4,5,8-trichlor-anthrachinon in Borsäure-Schwefelsäure 1-Amino-4-hydroxy-5,8-dichlor-anthrachinon herstellen (DE—PS 203 083) und die Umsetzung von 1-Nitro-4,5-dichlor-anthrachinon in Oleum/Borsäure/Schwefel führt glatt zu 1-Amino-4-hydroxy-5-chlor-anthrachinon (BIOS 1493, S. 44).

Die Bromierung von 1-Hydroxy-5-nitro-anthrachinon führt zu 1-Hydroxy-4-brom-5-nitro-anthrachinon (Houben-Weyl, Band 7/3c, S. 122), dessen vorsichtige Reduktion 1-Hydroxy-4-brom-5-amino-anthrachinon ergibt.

Auch in Nitro-amino-hydroxy-anthrachinonen läßt sich die Nitrogruppe durch die Arylthiogruppe ersetzen. Geeignete Verbindungen dieses Typs sind z.B. die in der DE—OS 2 405 812 (GB—PS 1 492 851), DE—AS 2 428 338, DE—AS 2 428 452 und DE—AS 2 730 720 beschriebenen 1-Amino-5-nitro-4,8-dihydroxy- und 1-Amino-8-nitro-4,5-dihydroxy-anthrachinone.

Die Verbindungen fallen i.a. in ungenügender Reinheit für ihre Verwendung in Flüssigkristallzusammensetzungen an, so daß zusätzliche Reinigungsmaßnahmen wie Umkristallisieren, Säulenchromatographie oder eine Flüssig-Flüssig-Verteilung notwendig werden.

Das beanspruchte dichroitische Material, vorzugsweise in Form flüssigkristalliner Phasen enthaltend mindestens einen Farbstoff der Formel (I), findet vorzugsweise in optoelektronischen Anzeigeelementen Verwendung.

Die erfindungsgemäß verwendeten Farbstoffe besitzen eine ausgezeichnete Lichttechtheit, einen hohen Ordnungsgrad und in überwiegendem Maße eine für die technische Verwendung ausreichend hohe Farbdichte in flüssigkristallinen Materialien. Die genannten Eigenschaften sind für die Eignung als Farbstoffe in optoelektronischen Anzeigeelementen, die nach dem guest-host-Prinzip arbeiten, von entscheidender Bedeutung (DE—OS 3 028 593).

Optoelektronische Anzeigeelemente bestehen in der Regel aus zwei parallel (im Abstand von 5—50 μ) angeordneten Glasplatten. An deren Innenseiten werden Elektroden angebracht, zwischen denen das flüssigkristalline Material eingebettet wird. Die Funktionsfähigkeit einer optoelektronischen Anzeige beruht auf der orientierten Struktur der Flüssigkristalle, die sich durch das angelegte elektrische Feld verändern läßt.

Die orientierte Struktur der flüssigkristallinen Materialien kann sich geeigneten Farbstoffen mitteilen, so daß diese als "Gäste" an der Struktur teilnehmen.

Die erfindungsgemäßen Farbstoffe werden in guest-host-Anzeigen, deren Aufbau und Arbeitsweise

bekannt ist (Heilmeyer et al., Mol. Crystals and Liquid Cryst. *8*, 293—309 (1969), DE—OS 2 639 675, DE—OS 2 568 568), als Lösung in einer nematischen Flüssigkristallmischung verwendet. Das flüssigkristalline Material als Wirtsphase enthält wenigstens einen Farbstoff der Formel (I) und kann daneben weitere Farbstoffe enthalten. Diese können dichroitische Eigenschaften besitzen oder nicht.

Die Lösung besteht aus etwa 0,01 bis etwa 30 Gew.-%, vorzugsweise etwa 0,1 bis etwa 10 Gew.-% Farbstoff (als Gast) und aus der Wirtsphase, die überwiegend aus nematischem flüssigkristallinem Material besteht und weitere Zusätze, beispielsweise zur cholesterinischen Orientierung enthalten kann.

Das flüssigkristalline Material hat vorzugsweise positive dielektrische Anisotropie und kann in optoelektronischen Anzeigevorrichtungen eingesetzt werden.

Von den verschiedenen Ordnungszuständen flüssigkristalliner Materialien sind die nematischen und cholesterinischen bevorzugt, entsprechend den Definitionen, wie sie beispielsweise bei R. Steinsträßer und L. Pohl, Angew. Chem. *85*, 706 (1973) angegeben sind.

Im feldlosen Zustand kann man zwei Orientierungen des flüssigkristallinen Materials unterscheiden, die von der Eigenschaft der Phasengrenze und damit von der Vorbehandlung der Glasplatten abhängen. Je nachdem, ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann, 4. Aufl (1976), Band XI, s. 657 ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ, wenn sie homogen wird. Die Verwendung der erfindungsgemäßen Farbstoffe in flüssigkristallinen Materialien mit positiver dielektrischer Anisotropie ist bevorzugt. Als flüssigkristalline Materialien geeignet sind beispielsweise Mischungen, die überwiegend 4-Cyano-biphenyle enthalten. Ein Beispiel ist die Mischung E 7 der Fa. BDH-Chemicals Ltd. (GB), oder solche, die überwiegend 1-(4-Cyanophenyl)-4-alkyl-cyclohexane enthalten sind auch geeignet. Ein Beispiel hierfür ist die Mischung ZLI 1132 der Fa. Merck (Darmstadt). Weiterhin geeignet sind Mischungen der vorgenannten Stoffklassen mit (4-Cyanophenyl)-pyrimidinen, wie sie beispielsweise in der Mischung ROTN 30 der Fa. La Roche vorliegt.

Als weitere Beispiel für käufliche und geeignete Flüssigkristallmischungen sind für eine positive DK-Anisotropie Produkte auf Cyanopyrimidin- und Cyanoester-Basis, sowie Mischungen aus BCH, PCH, und PCH-Ester und PCH, BCH, BCH-Ester und Terphenyl (z.B. ®"ROTN 402", ®"ROTN 103", ®"Merck 1221 TNC", ®"Merck 1291 TNC", ®"Merck 1691", ®"Merck 1840", zu nennen.

Daneben aber können eine große Zahl anderer Komponenten eingesetzt werden, wobei in aller Regel Mischungen in Frage kommen, die den genannten Bestandteil enthalten. Insbesondere geeignet sind Verbindungen der folgenden Stoffklassen:

i 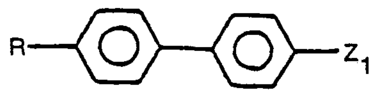

ii 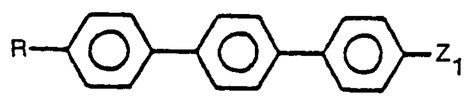

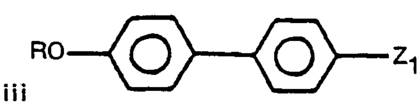
iii

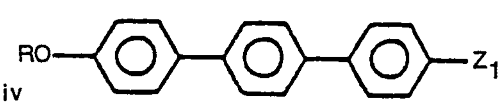
iv

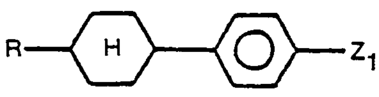
v

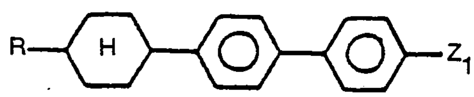
vi

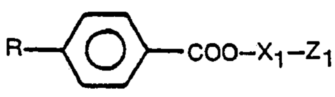
vii

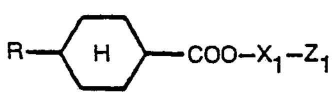
viii

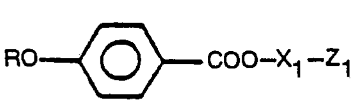
ix

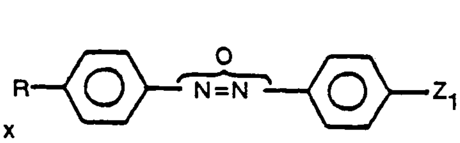
x

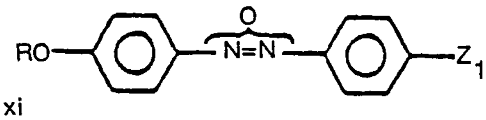
xi

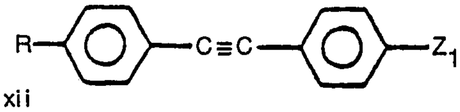
xii

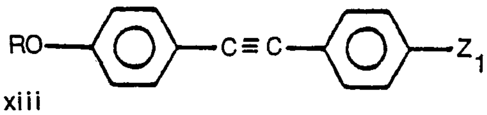
xiii

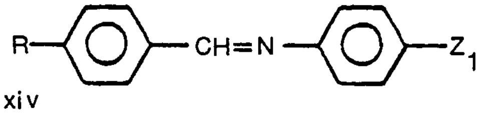
xiv

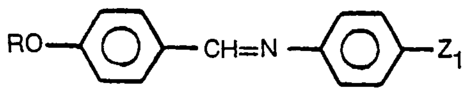
xv

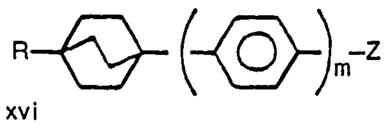 ; m 1,2
xvi

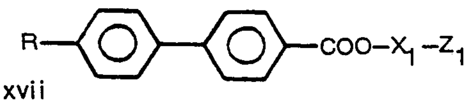
xvii

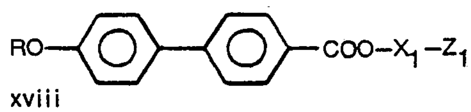
xviii

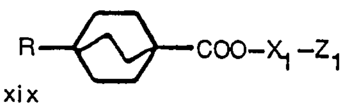
xix

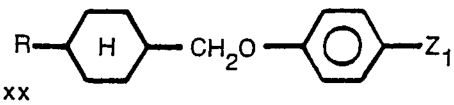
xx

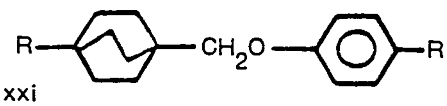
xxi

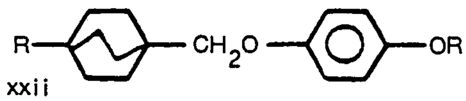
xxii

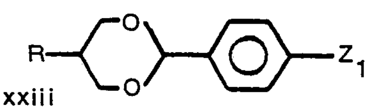
xxiii

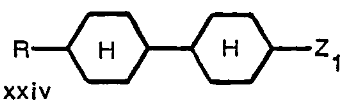
xxiv

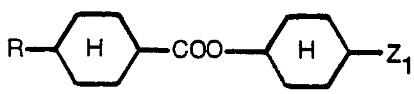
xxv

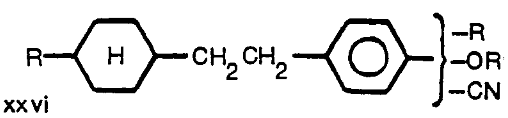
xxvi

Jeder der enthaltenen Benzolringe kann durch einen oder mehrere Substituenten, z.B. Fluor, substituiert sein. Dabei ist

R eine Alkylgruppe,

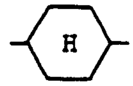

ein trans-1,4-substituierter Cyclohexan-Ring

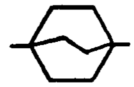

ein 1,4-substituierter Bicyclo[2,2,2]-octan-Ring,

$X_1$ eine 1,4-Phenylen-, 4,4'-Biphenyl- oder 2,6-Naphthyl-Gruppe,
$Z_1$ CN, $R_1$, $OR_1$ oder CO—O—$X_1$—$Z_2$ und
$Z_2$ CN, $R_1$ oder $OR_1$,
$R_1$ hat dieselbe Bedeutung wie R.

Neben den flüssigkristallinen Verbindungen und dem Farbstoff kann das flüssigkristalline Material weitere übliche Zusätze enthalten, z.B. optisch aktive Verbindungen, die eine nematische Phase in eine cholesterinische umwandeln können oder Substanzen zur Verminderung der Schwellenspannung usw.

Die Güte der guest-host-Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1.0 annimmt. Praktisch wird dieser Wert nicht erreicht, vielmehr sind die S-Werte <1,0. Die in der Literatur angegebenen Werte sind wegen unterschiedlicher Meßtechniken nicht ohne weiteres vergleichbar. Die Definition des Ordnungsgrades und seine Bedeutung ist bei D. L. White und G. N. Taylor, J. Appl. Phys. (5) *1974*, 4718—4723 oder beispielsweise in EP—OS 2 104 beschrieben. Die S-Werte der anspruchsgemäßen Verbindungen sind in Tabelle 3 aufgeführt.

Für die technische Verwendung sind Farbstoffe mit hohem Ordnungsgrad besonders wertvoll. Jedoch müssen eine Reihe weiterer Eigenschaften vorhanden sein. Die photochemische Stabilität muß sehr gut sein, der Farbton darf im Licht weder verschießen noch ausbleichen. Darüber hinaus wird eine gute chemische Beständigkeit in dem komplex zusammengesetzten flüssigkristallinen Medium verlangt. Schließlich muß der Farbstoff eine hohe Farbdichte zeigen und darf auch bei anhaltend tiefen Temperaturen nicht kristallisieren.

Es ist offensichtlich, daß es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

Es bedeutet eine besondere Schwierigkeit, die Farbstoffe unter Erhalt der dichroitischen Echtheits- und Farbeigenschaften ausreichend löslich zu machen. Gerade zur Optimierung der Löslichkeit sind zahlreiche Versuche notwendig und es läßt sich diese Eigenschaft nur sehr unvollkommen voraussagen.

In der Literatur sind Anthrachinone schon länger als dichroitische Farbstoffe bekannt, beispielsweise aus den Literaturstellen DE—OS 2 363 219, US—PS 3 864 022, US—PS 3 975 285, DE—OS 2 418 364, DE—OS 2 815 335, DE—OS 2 920 730, DE—OS 3 006 744, DE—OS 2 082 196, EP—A1—2104, EP—A1—49035 sowie den japanischen Patentanmeldungen 56 112 967, 56 38 376 und 56 10 583.

Die literaturbekannten Verbindungen insgesamt erweisen sich als verbesserungsbedürftig in Bezug auf Ordnungsgrad, Farbdichte, Lichtbeständigkeit und/oder Farborte.

Die erfindungsgemäßen Farbstoffe liefern je nach Substitution gelbe bis blaue Nuancen von ausgezeichneter Lichtechtheit und Farbstärke. Sie sind darüber hinaus sehr gut in Mischungen zum Aufbau von Schwarznuancen einsetzbar.

Die erfindungsgemäß einsetzbaren Farbstoffe sind von besonderem Wert zum Aufbau von Schwarzmischungen für Flüssigkristallzusammensetzungen in Kombination mit Anthrachinon- und Azofarbstoffen. Für derartige Kombinationen geeignete Anthrachinonfarbstoffe sind z.B. aus EP—OS 26 004, DE—OS 3 009 940, DE—OS 3 009 974, EP—OS 34 832, DE—OS 2 903 095, DE—OS 3 028 593, DE—OS 3 036 853 und DE—OS 3 038 372 bekannt.

Im folgenden wird die "Colour Index Hue Indication Chart" (Society of Dyers and Colourists, GB und American Association of Textile Chemists and Colorists, US) mit "CIHIC" abgekürzt.

In der älteren EP—A 0 074 523 wird dichroitisches Material beschrieben, welches Farbstoffe der Formel des Anspruchs 1 mit $Y_1$—$Y_3$=S—Ar und $Y_4$=H sowie entsprechende Farbstoffe mit $Y_1$—$Y_4$=S—Ar enthält; Hand der Technik gemüss Art. 54(3).

In der GB—A 20 43 097 wird dichroitisches Material beschrieben, welches als Farbstoffe Benzothiazolyl-(2)-thio-anthrachinone enthält.

In der GB—A 20 82 196 wird dichroitisches Material beschrieben, welches als Farbstoff Di-phenylthiodi-amino-anthrachinon enthält.

Beispiel 1

a) Ein Gemisch aus 7,7 g 1-Amino-4-chlor-anthrachinon, hergestellt durch Chlorierung von 1-Benzoyl-amino-anthrachinon und nachfolgende Entacylierung (vgl. FIAT Final Rep. *1313* II, 33 (1948)), 4,1 g trockenem Kaliumcarbonat, 50 ccm Dimethylformamid und 5,5 g 4-tert.-Butyl-thiophenol wird auf 125°C erhitzt, bis nach ca. 1 Stunde das orangegelbe Ausgangsmaterial vollständig umgesetzt ist. Nach Abkühlung auf ca. 70°C verdünnt man das Reaktionsgemisch mit 50 ccm Methanol und läßt auf Raumtemperatur abkühlen. Der auskristallisierte Farbstoff wird abgesaugt, mit Methanol und Wasser gewaschen und getrocknet. Man erhält 5,7 g, entsprechend 49% der Theorie, 1-Amino-4-(4-tert.-butyl-phenyl-mercapto)-anthrachinon. Zur Reinigung wird der Farbstoff aus Dimethylformamid umkristallisiert.

Der Farbton des an Kieselgel adsorbierten Farbstoffes ist ein blaustichiges Rot mit der Indikator Number 9 bis 10 (CIHIC).

b) In der nematischen Phase, bestehend aus einer Mischung von ca. 24 % trans-4-Heptyl-(4-cyano-phenyl)-cyclohexan, 37 % trans-4-Pentyl-(4-cyano-phenyl)-cyclohexan, 26 % trans-4-Propyl-(4-cyano-phenyl)-cyclohexan und 12 % trans-4-Pentyl-(4'-cyanobiphenylyl)-cyclohexan, löst man 0,5 % des in Beispiel 1a hergestellten Farbstoffes. Man erhält eine rot eingefärbte Flüssigkristallmischung, in der der Farbstoff einen Ordnungsgrad S von 0,69 aufweist.

c) In der flüssigkristallinen Phase, bestehend aus 51 % 4'-n-Pentyl-4-cyanobiphenyl, 25 % 4'-n-Heptyl-4-cyano-biphenyl, 16 % 4'-n-Octyl-4-cyano-biphenyl und 8 % 4''-n-Pentyl-4-cyano-terphenyl, löst man 0,5

% des in Beispiel 1a hergestellten Farbstoffes. Man erhält eine rot eingefärbte Flüssigkristallmischung in der der Farbstoff einen Ordnungsgrad S von 0,69 aufweist.

Ähnlich gute Ordnungsgrade findet man auch, wenn man andere, z.B. die auf den Seiten 25—29 beschriebenen Flüssigkristallmischungen einsetzt.

Beispiel 2

a) 15 g 5-Amino-1,4-dichlor-anthrachinon (Herstellung s. DE—AS 1 151 517, Bsp. 1—3) und 8,5 g Kaliumcarbonat (trocken und gemahlen) werden in 75 ccm Dimethylformamid eingetragen. Dazu gibt man 16,4 g 4-Chlor-thiophenol und erhitzt so lange auf 120 bis 125°C, bis nach etwa 1 Stunde das Ausgangsmaterial restlos umgesetzt ist. Man läßt erkalten, saugt ab, wäscht mit Methanol, rührt das methanol-feuchte Produkt in 500 ccm heißes Wasser ein, saugt erneut ab und wäscht mit Wasser. Nach dem Trocknen bei 60°C erhält man 15,9 g des in roten Nadeln kristallisierten 1-Amino-5,8-di-(4-chlorphenylmercapto)-anthrachinons, entsprechend einer Ausbeute von 60 % der Theorie.

Der Farbton des an Kieselgel adsorbierten Farbstoffs ist ein blaustichiges Rosa mit der Indicator Number 50—51 (CIHIC).

b) In den in Beispiel 1b oder 1c genannten Flüssigkristallmischungen gelöst zeigt der mit roter Farbe lösliche Farbstoff einen Ordnungsgrad S von 0,77. Ähnlich gute Ordnungsgrade findet man auch in anderen, z.B. den auf den Seiten 25—29 beschriebenen Flüssigkristallmischungen.

Beispiel 3

a) 9,8 g 1-Amino-4,5,8-trichlor-anthrachinon (Herstellung s. DE—AS 1 228 274, Bsp. 6) und 12,3 g Kaliumcarbonat (trocken und gemahlen) werden in 50 ccm N-Methylpyrrolidon eingetragen und mit 16,5 g 4-tert.-Butyl-thiophenol versetzt. Unter einem leichten Stickstoffstrom erhitzt man solange auf 125 bis 130°C, bis nach etwa 4 Stunden das Ausgangsmaterial völlig umgesetzt ist. Dann läßt man auf ca. 70°C abkühlen, verdünnt das Reaktionsgemisch mit 50 ccm Methanol, saugt nach völligem Erkalten ab und wäscht das kristalline Produkt mit Methanol und heißem Wasser. Nach Umkristallisation des bei 60°C getrockneten Produkts erhält man 11,4 g 1-Amino-4,5,8-tri-(4-tert.-butyl-phenylmercapto)-anthrachinon, entsprechend einer Ausbeute von 53 % der Theorie.

Der Farbton des an Kieselgel adsorbierten Farbstoffes ist ein Violett mit der Indicator Number 12 (CIHIC).

b) In den in Beispiel 1b oder 1c genannten Flüssigkristallmischungen gelöst zeigt der mit violetter Farbe lösliche Farbstoff einen Ordnungsgrad S von 0,78. Ähnlich gute Ordnungsgrade findet man auch in anderen, z.B. den auf S. 25—29 beschriebenen Flüssigkristallmischungen.

Beispiel 4

a) Ein Gemisch aus 8,5 g 1,4-Diamino-5-nitro-anthrachinon (Herstellung s. BIOS *1484*, 20), 50 ccm N-Methylpyrrolidon und 4,4 g Kaliumcarbonat versetzt man mit 4,1 g 4-Methyl-thiophenol und erhitzt auf 125 bis 130°C, bis die Reaktion nach ca. 2 Stunden beendet ist. Man verdünnt das Reaktionsgemisch bei 70°C mit 50 ccm Methanol, saugt kalt ab, wäscht den Farbstoff mit Methanol und Wasser und trocknet ihn bei ca. 60°C. Man erhält 9,1 g 1,4-Diamino-5-(4-methylphenylmercapto)-anthrachinon, entsprechend einer Ausbeute von 84 % der Theorie. Das Produkt kann durch Umkristallisation, z.B. aus Isopropanol gereingt werden. Der Farbton des an Kieselgel adsorbierten Farbstoffes ist ein blaustichiges Violett zwischen den Indicator Numbers 12 und 13 (CIHIC).

b) In den in Beispiel 1b oder 1c genannten Flüssigkristallmischungen gelöst zeigt der mit violetter Farbe lösliche Farbstoff einen Ordnungsgrad S von 0,74. Auch in anderen, z.B. den auf Seiten 25—29 beschriebenen Flüssigkristallmischungen findet man ähnlich gute Ordnungsgrade.

Beispiel 5

a) In 50 ccm N-Methylpyrrolidon trägt man 9,3 g 1,4-Dihydroxy-5,8-dichloranthrachinon (Herstellung s. DE—AS 1 199 279) und 8,3 g Kaliumcarbonat (trocken, gemahlen) ein. Man versetzt mit 9,6 g 4-Chlorthiophenol und erhitzt unter Stickstoff so lange auf 125 bis 130°C, bis nach etwa 2 Stunden das Ausgangsmaterial restlos umgesetzt ist. Man verdünnt bei ca. 70°C mit 30 ccm Methanol, saugt nach Erkalten ab, wäscht das Produkt mit Methanol, rührt es mit warmem Wasser aus, saugt erneut ab und wäscht mit Wasser und trocknet bei 60°C. Man erhält 10,5 g 1,4-Di-(4-chlorphenylmercapto)-5,8-dihydroxy-anthrachinon, entsprechend einer Ausbeute von 66 % der Theorie.

Der Farbton des an Kieselgel adsorbierten Farbstoffs ist ein blaustichiges Rot mit der Indicator Number 10 (CIHIC).

b) In den in Beispiel 1b oder 1c genannten Flüssigkristallmischungen gelöst zeigt der mit roter Farbe lösliche Farbstoff einen Ordnungsgrad S von 0,74. Ähnlich gute Ordnungsgrade findet man auch in anderen, z.B. den auf den Seiten 25—29 beschriebenen Flüssigkristallmischungen.

Beispiel 6

a) Geht man vor wie in Beispiel 2 und verwendet statt 5-Amino-1,4-dichlor-anthrachinon die gleiche Menge 5-Hydroxy-1,4-dichlor-anthrachinon (Herstellung s. GB—PS 1 029 448), so erhält man 15,2 g 1-Hydroxy-5,8-di(4-chlor-phenylmercapto)-anthrachinon, entsprechend einer Ausbeute von 58 % der Theorie.

b) In den in Beispiel 1b oder 1c genannten Flüssigkristallmischungen gelöst zeigt der mit roter Farbe lösliche Farbstoff einen Ordnungsgrad S von 0,74.

Beispiel 7

a) Geht man vor wie in Beispiel 2 und 6 beschrieben und verwendet statt der dort eingesetzten Anthrachinonverbindungen 1-Hydroxy-4,8-dichlor-anthrachinon (Herstellung analog, GB—PS 1 029 448), so erhält man 16,1 g 1-Hydroxy-4,8-di-(4-chlorphenylmercapto)-anthrachinon, entsprechend einer Ausbeute von 61 % der Theorie.

b) In den in Beispiel 1b oder 1c genannten Flüssigkristallmischungen gelöst zeigt der mit roter Farbe lösliche Farbstoff einen Ordnungsgrad S von 0,77.

Beispiel 8

a) Geht man vor wie in Beispiel 3 beschrieben und verwendet statt 1-Amino-4,5,8-trichlor-anthrachinon die gleiche Menge 1-Hydroxy-4,5,8-trichlor-anthrachinon (Herstellung analog GB—PS 1 029 448 aus 1-Amino-4,5,8-trichlor-anthrachinon), so erhält man 12,5 g 1-Hydroxy-4,5,8-tri-(4-tert.-butyl-phenylmercapto)-anthrachinon, entsprechend einer Ausbeute von 58 % der Theorie.

b) In den in Beispiel 1b oder 1c genannten Flüssigkristallmischungen gelöst zeigt der mit roter Farbe lösliche Farbstoff einen Ordnungsgrad S von 0,73.

Beispiel 9

a) Ein Gemisch aus 10 g 1,5-Dihydroxy-4,8-dinitro-anthrachinon, 5,5 g Kaliumcarbonat (trocken, gemahlen) und 75 ccm Dimethylformamid versetzt man mit 8 g Thiophenol und erhitzt unter Rühren auf 120 bis 125°C bis die Umsetzung nach etwa 1 Stunde beendet ist. Man verdünnt das Reaktionsgemisch bei etwa 70°C mit 50 ccm Methanol, saugt nach vollständigem Abkühlen ab, wäscht mit Methanol, rührt die Kristalle mit heißem Wasser aus, saugt erneut ab, wäscht mit heißem Wasser und trocknet bei 60°C. Man erhält 9,6 g 1,5-Dihydroxy-4,8-diphenylmercaptoanthrachinon entsprechend einer Ausbeute von 69 % der Theorie.

Der Farbstoff kann zur weiteren Reinigung aus Dimethylformamid umkristallisiert werden. Der Farbton des an Kieselgel adsorbierten Farbstoffs ist ein Violett mit der Indicator Number 10 bis 11 (CIHIC).

b) In den in Beispiel 1b oder 1c genannten Flüssigkristallmischungen gelöst zeigt der mit violetter Farbe lösliche Farbstoff einen Ordnungsgrad S von 0,71.

Beispiel 10

a) In 50 ccm N-Methyl-pyrrolidon trägt man 10 g 1-Amino-5-nitro-4,8-dihydroxy-anthrachinon (Herstellung s. z.B. DE—AS 2 428 452), 2,8 g Kaliumcarbonat (trocken, gemahlen) und 6,1 g 4-tert.-Butylthiophenol ein und erhitzt das Gemisch unter Rühren so lange auf 120 bis 125°C, bis die Umsetzung nach etwa 1 Stunde beendet ist. Man verdünnt das Reaktionsgemisch bei etwa 70°C mit einer Mischung aus 100 ccm Methanol und 35 ccm Wasser, saugt nach völligem Abkühlen ab, wäscht vorsichtig mit Methanol und dann mit Wasser und trocknet bei 60°C. Man erhält 6,9 g 1-Amino-5-(4-tert.-butyl-phenylmercapto)-4,8-dihydroxy-anthrachinon, entsprechend einer Ausbeute von 49 % der Theorie. Der Farbstoff wird zur weiteren Reinigung durch Chromatographie an Kieselgel gereinigt.

Der Farbton des an Kieselgel adsorbierten Farbstoffes ist ein blaustichiges Violett mit der Indicator Number 12 bis 13 (CIHIC).

b) In den in Beispiel 1b oder 1c genannten Flüssigkristallmischungen gelöst zeigt der mit blauvioletter Farbe lösliche Farbstoff einen Ordnungsgrad S von 0,69.

Beispiel 11

Verfährt man wie in Beispiel 5 und verwendet statt des dort eingesetzten Anthrachinonderivates die gleiche menge 1-Amino-4-hydroxy-5,8-dichlor-anthrachinon (Herstellung s. DE—PS 203 083), so erhält man 10,9 g 1-Amino-4-hydroxy-5,8-di-(4-chlor-phenylmercapto)-anthrachinon, entsprechend einer Ausbeute von 68 % der Theorie.

b) In den in Beispiel 1b oder 1c genannten Flüssigkristallmischungen gelöst zeigt der Farbstoff einen Ordnungsgrad S von 0,76.

Beispiel 12

a) Verfährt man wie in Beispiel 4 und verwendet statt des dort eingesetzten Anthrachinonderivates 8,2 g 1-Amino-4-hydroxy-5-chlor-anthrachinon (Herstellung s. BIOS *1493*, 44), so erhält man 9,6 g 1-Amino-4-hydroxy-5-(4-methyl-phenylmercapto)-anthrachinon, entsprechend einer Ausbeute von 88 % der Theorie.

b) In den in Beispiel 1b oder 1c genannten Flüssigkristallmischungen gelöst zeigt der mit blaustichig roter Farbe lösliche Farbstoff einen Ordnungsgrad S von 0,71.

Weitere Beispiele sind in der folgenden Tabelle 3 aufgeführt. In dieser Tabelle bezeichnen die Spalten $Y_1$, $Y_2$, $Y_3$, $Y_4$ den Substituenten und den Substitutionsort gemäß Formel (I). In den Spalten $S_1$, $S_2$, $S_3$ und $S_4$

ist der Ordnungsgrad in der nematischen Phase 1840 TNC (Fa. Merck, Darmstadt) angegeben. Die Daten werden in 0,5 %iger Lösung bei einer Schichtdicke von 23 µ gemessen und gemäß den bekannten Verfahren (z.B. GB—PS 2 071 685) ausgewertet. In der Tabelle 3 beziehen sich die Ordnungsgrade in Spalte

$S_1$ auf Farbstoffe mit Ar in der Bedeutung des unsubstituierten Phenyls,
$S_2$ auf Farbstoffe mit Ar in der Bedeutung 4-Methyl-phenyl,
$S_3$ auf Farbstoffe mit Ar in der Bedeutung 4-tert.-Butyl-phenyl und
$S_4$ auf Farbstoffe mit Ar in der Bedeutung 4-Chlor-phenyl.

TABELLE 3

| $Y_1$ | $Y_2$ | $Y_3$ | $Y_4$ | $S_1$ | $S_2$ | $S_3$ | $S_4$ |
|---|---|---|---|---|---|---|---|
| S—Ar | S—Ar | S—Ar | NH2 | 0.72 | 0.73 | 0.75 | 0.77 |
| S—Ar | S—Ar | S—Ar | OH | 0.68 | 0.70 | 0.72 | 0.75 |
| S—Ar | S—Ar | S—Ar | CL | 0.68 | 0.69 | 0.72 | 0.74 |
| S—Ar | S—Ar | NH2 | NH2 | 0.74 | 0.74 | 0.76 | 0.77 |
| S—Ar | NH2 | NH2 | S—Ar | 0.71 | 0.72 | 0.74 | 0.75 |
| S—Ar | NH2 | S—Ar | NH2 | | 0.77 | 0.78 | 0.79 |
| S—Ar | S—Ar | NH2 | OH | 0.71 | 0.72 | 0.73 | 0.75 |
| S—Ar | NH2 | OH | S—Ar | 0.68 | 0.69 | 0.71 | 0.73 |
| S—Ar | NH2 | S—Ar | OH | 0.74 | 0.75 | 0.76 | 0.77 |
| S—Ar | S—Ar | NH2 | CL | 0.70 | 0.71 | 0.73 | 0.74 |
| S—Ar | NH2 | CL | S—Ar | 0.67 | 0.68 | 0.70 | 0.72 |
| S—Ar | NH2 | S—Ar | CL | 0.73 | 0.74 | 0.75 | 0.77 |
| S—Ar | S—Ar | NH2 | NO2 | 0.67 | 0.68 | 0.70 | 0.72 |
| S—Ar | NH2 | NO2 | S—Ar | 0.67 | 0.68 | 0.70 | 0.72 |
| S—Ar | NH2 | S—Ar | NO2 | 0.67 | 0.68 | 0.70 | 0.72 |
| S—Ar | S—Ar | NH2 | H | 0.73 | 0.73 | 0.75 | 0.76 |
| S—Ar | NH2 | H | S—Ar | 0.70 | 0.71 | 0.72 | 0.74 |
| S—Ar | NH2 | S—Ar | H | 0.75 | 0.76 | 0.77 | 0.78 |
| S—Ar | S—Ar | OH | OH | 0.68 | 0.69 | 0.71 | 0.72 |
| S—Ar | OH | OH | S—Ar | 0.64 | 0.66 | 0.68 | 0.70 |
| S—Ar | OH | S—Ar | OH | 0.72 | 0.72 | 0.74 | 0.75 |
| S—Ar | S—Ar | OH | CL | 0.67 | 0.68 | 0.70 | 0.72 |
| S—Ar | OH | S—Ar | CL | 0.71 | 0.72 | 0.73 | 0.75 |
| S—Ar | S—Ar | OH | H | 0.70 | 0.71 | 0.72 | 0.74 |
| S—Ar | OH | H | S—Ar | 0.66 | 0.67 | 0.69 | 0.71 |
| S—Ar | OH | S—Ar | H | 0.73 | 0.74 | 0.75 | 0.76 |
| S—Ar | S—Ar | CL | CL | 0.66 | 0.67 | 0.69 | 0.71 |
| S—Ar | CL | S—Ar | CL | 0.70 | 0.71 | 0.72 | 0.74 |
| S—Ar | S—Ar | CL | H | 0.69 | 0.70 | 0.72 | 0.73 |
| S—Ar | CL | H | S—Ar | 0.66 | 0.66 | 0.69 | 0.71 |
| S—Ar | CL | S—Ar | H | 0.72 | 0.73 | 0.74 | 0.76 |
| S—Ar | S—Ar | NO2 | H | 0.65 | 0.66 | 0.68 | 0.70 |
| S—Ar | NO2 | S—Ar | H | 0.65 | 0.66 | 0.68 | 0.70 |
| S—Ar | NH2 | NH2 | NH2 | 0.74 | 0.74 | 0.75 | 0.75 |
| S—Ar | NH2 | NH2 | OH | 0.71 | 0.71 | 0.72 | 0.73 |
| S—Ar | OH | NH2 | NH2 | 0.71 | 0.71 | 0.72 | 0.73 |
| S—Ar | NH2 | OH | NH2 | 0.71 | 0.71 | 0.72 | 0.73 |
| S—Ar | NH2 | NH2 | CL | 0.70 | 0.71 | 0.71 | 0.72 |
| S—Ar | CL | NH2 | NH2 | 0.70 | 0.71 | 0.71 | 0.72 |
| S—Ar | NH2 | CL | NH2 | 0.70 | 0.71 | 0.71 | 0.72 |
| S—Ar | NH2 | NH2 | NO2 | 0.66 | 0.67 | 0.68 | 0.69 |
| S—Ar | NO2 | NH2 | NH2 | 0.70 | 0.70 | 0.71 | 0.72 |
| S—Ar | NH2 | NO2 | NH2 | 0.73 | 0.73 | 0.74 | 0.75 |
| S—Ar | NH2 | NH2 | H | 0.72 | 0.73 | 0.73 | 0.74 |
| S—Ar | H | NH2 | NH2 | 0.72 | 0.73 | 0.73 | 0.74 |
| S—Ar | NH2 | H | NH2 | 0.72 | 0.73 | 0.73 | 0.74 |
| S—Ar | NH2 | OH | OH | 0.68 | 0.68 | 0.69 | 0.70 |
| S—Ar | OH | OH | NH2 | 0.68 | 0.68 | 0.69 | 0.70 |
| S—Ar | OH | NH2 | OH | 0.68 | 0.68 | 0.69 | 0.70 |
| S—Ar | NH2 | OH | CL | 0.67 | 0.67 | 0.68 | 0.69 |

TABELLE 3 (Fortsetzung)

| $Y_1$ | $Y_2$ | $Y_3$ | $Y_4$ | $S_1$ | $S_2$ | $S_3$ | $S_4$ |
|---|---|---|---|---|---|---|---|
| S—Ar | CL | OH | NH2 | 0.67 | 0.67 | 0.68 | 0.69 |
| S—Ar | NH2 | CL | OH | 0.67 | 0.67 | 0.68 | 0.69 |
| S—Ar | OH | NH2 | CL | 0.67 | 0.67 | 0.68 | 0.69 |
| S—Ar | OH | CL | NH2 | 0.67 | 0.67 | 0.68 | 0.69 |
| S—Ar | CL | NH2 | OH | 0.67 | 0.67 | 0.68 | 0.69 |
| S—Ar | NO2 | OH | NH2 | 0.66 | 0.67 | 0.68 | 0.69 |
| S—Ar | NH2 | NO2 | OH | 0.70 | 0.71 | 0.71 | 0.72 |
| S—Ar | OH | NO2 | NH2 | 0.70 | 0.71 | 0.71 | 0.72 |
| S—Ar | NO2 | NH2 | OH | 0.66 | 0.67 | 0.68 | 0.69 |
| S—Ar | NH2 | OH | H | 0.69 | 0.70 | 0.71 | 0.72 |
| S—Ar | H | OH | NH2 | 0.69 | 0.70 | 0.71 | 0.72 |
| S—Ar | NH2 | H | OH | 0.69 | 0.70 | 0.71 | 0.72 |
| S—Ar | OH | NH2 | H | 0.69 | 0.70 | 0.71 | 0.72 |
| S—Ar | OH | H | NH2 | 0.69 | 0.70 | 0.71 | 0.72 |
| S—Ar | H | NH2 | OH | 0.69 | 0.70 | 0.71 | 0.72 |
| S—Ar | NH2 | CL | CL | 0.66 | 0.66 | 0.67 | 0.68 |
| S—Ar | CL | CL | NH2 | 0.66 | 0.66 | 0.67 | 0.68 |
| S—Ar | CL | NH2 | CL | 0.66 | 0.66 | 0.67 | 0.68 |
| S—Ar | NO2 | CL | NH2 | 0.65 | 0.66 | 0.67 | 0.68 |
| S—Ar | NH2 | NO2 | CL | 0.69 | 0.70 | 0.71 | 0.72 |
| S—Ar | CL | NO2 | NH2 | 0.69 | 0.70 | 0.71 | 0.72 |
| S—Ar | NO2 | NH2 | CL | 0.65 | 0.66 | 0.67 | 0.68 |
| S—Ar | NH2 | CL | H | 0.69 | 0.69 | 0.70 | 0.71 |
| S—Ar | H | CL | NH2 | 0.69 | 0.69 | 0.70 | 0.71 |
| S—Ar | NH2 | H | CL | 0.69 | 0.69 | 0.70 | 0.71 |
| S—Ar | CL | NH2 | H | 0.69 | 0.69 | 0.70 | 0.71 |
| S—Ar | CL | H | NH2 | 0.69 | 0.69 | 0.70 | 0.71 |
| S—Ar | H | NH2 | CL | 0.69 | 0.69 | 0.70 | 0.71 |
| S—Ar | NH2 | H | NO2 | 0.65 | 0.65 | 0.66 | 0.67 |
| S—Ar | NO2 | NH2 | H | 0.68 | 0.69 | 0.70 | 0.71 |
| S—Ar | H | NH2 | NO2 | 0.65 | 0.65 | 0.66 | 0.67 |
| S—Ar | NH2 | H | H |  | 0.71 | 0.72 | 0.73 |
| S—Ar | H | H | NH2 | 0.66 | 0.66 | 0.67 | 0.68 |
| S—Ar | H | NH2 | H | 0.71 | 0.71 | 0.72 | 0.73 |
| S—Ar | OH | NO2 | OH | 0.67 | 0.67 | 0.68 | 0.69 |
| S—Ar | OH | OH | H | 0.66 | 0.66 | 0.68 | 0.69 |
| S—Ar | H | OH | OH | 0.66 | 0.66 | 0.68 | 0.69 |
| S—Ar | OH | H | OH | 0.66 | 0.66 | 0.68 | 0.69 |
| S—Ar | OH | NO2 | CL | 0.66 | 0.66 | 0.67 | 0.69 |
| S—Ar | CL | NO2 | OH | 0.66 | 0.66 | 0.67 | 0.68 |
| S—Ar | OH | CL | H | 0.65 | 0.66 | 0.67 | 0.68 |
| S—Ar | H | CL | OH | 0.65 | 0.66 | 0.67 | 0.68 |
| S—Ar | OH | H | CL | 0.65 | 0.66 | 0.67 | 0.68 |
| S—Ar | CL | OH | H | 0.65 | 0.66 | 0.67 | 0.68 |
| S—Ar | CL | H | OH | 0.65 | 0.66 | 0.67 | 0.68 |
| S—Ar | H | OH | CL | 0.65 | 0.66 | 0.67 | 0.68 |
| S—Ar | OH | NO2 | H | 0.69 | 0.69 | 0.70 | 0.71 |
| S—Ar | NO2 | OH | H | 0.64 | 0.65 | 0.66 | 0.67 |
| S—Ar | OH | H | H | 0.68 | 0.68 | 0.69 | 0.70 |
| S—Ar | H | OH | H | 0.68 | 0.68 | 0.69 | 0.70 |
| S—Ar | CL | NO2 | CL | 0.65 | 0.65 | 0.66 | 0.68 |
| S—Ar | CL | NO2 | H | 0.68 | 0.68 | 0.69 | 0.70 |
| S—Ar | CL | H | H | 0.67 | 0.67 | 0.68 | 0.69 |
| S—Ar | H | CL | H | 0.67 | 0.67 | 0.68 | 0.69 |

Beispiel 13

a) Verfährt man wie in Beispiel 2 und verwendet statt des dort eingesetzten 4-Chlor-thiophenols 25,4 g 4-Mercapto-benzoesäure-n-pentylester (Herstellung s. P. F. Wiley, J. Org. Chem. *16* (1951), 812 sowie S. Smiles und D. C. Harrison, J. Chem. Soc. (London) *121* (1922), 2022, 2024 und D. Bramley und N. H. Chamberlain, J. Chem. Soc. (London) *1942* 376; die freie Säure wird in der üblichen Weise mit Pentanol verestert), so erhält man ganz entsprechend 21,4 g 1-Amino-5,8-di-(4-n-pentoxy-carbonyl-phenylmercapto)-anthrachinon, entsprechend einer Ausbeute von 62% der Theorie.

Der Farbton des an Kieselgel adsorbierten Farbstoffs ist ein blaustichiges Rosa mit der Indicator Number 50 bis 51 (CIHIC).

b) In den in Beispiel 1b oder 1c genannten Flüssigkristallmischungen gelöst zeigt der mit roter Farbelösliche Farbstoff einen Ordnungsgrad S von 0,78. Ähnlich gute Ordnungsgrade findet man auch in anderen, z.B. den auf S. 25—29 beschriebenen Flüssigkristallmischungen.

c) Der ganz entsprechend hergestellte 4-Mercapto-benzoesäure-n-propylester läßt sich zu einem analogen Rotfarbstoff umsetzen, der in den in Beispiel 1b oder 1c genannten flüssigkristallmischungen gelöst einen Ordnungsgrad S von 0,76 zeigt.

Analog gelingt auch die Herstellung des Methylesters (s = 0,75); Ethylesters (s = 0,76); n-Butylesters (S = 0,77) und des n-Octylesters (S = 0,75).

d) Die ganz entsprechend hergestellten 4-Mercapto-benzoesäure-phenylester und 3-Mercapto-benzoesäure-phenylester lassen sich zu angalogen Rotfarbstoffen umsetzen, die in den in Beispiel 1b oder 1c genannten Flüssigkristallmischungen gelöst Ordnungsgrade S von 0,77 bzw. 0,76 zeigen.

Beispiel 14

a) In 50 ccm N-Methyl-pyrrolidon trägt man 8,2 g 1,5-Diamino-4-chlor-anthrachinon und 4,1 g Kaliumcarbonat (trocken, gemahlen) ein, versetzt mit 6,7 g 3-Mercapto-benzoesäure-n-pentylester und erhitzt das Gemisch so lange unter Rühren auf 120—125°C, bis nach ca. 2 Stunden das Ausgangsmaterial restlos umgesetzt ist. Man verdünnt dann mit 50 ccm Methanol und arbeitet auf wie zuvor beschrieben. Man erhält 9,5 g 1,5-Diamino-4-(3-pentoxy-carbonylphenylmercapto)-anthrachinon, entsprechend einer Ausbeute von 68% der Theorie.

Der Farbton des an Kieselgel adsorbierten Farbstoffes ist ein Rotviolett mit der Indicator Number 10 bis 11 (CIHIC).

b) In den in Beispiel 1b oder 1c genannten Flüssigkristallmischungen gelöst zeigt der mit rotvioletter Farbe lösliche Farbstoff einen Ordnungsgrad S von 0,77.

c) Analog gelingt auch die Herstellung des Methylesters (S = 0,75); Ethylesters (S = 0,74); n-Propylesters (S = 0,75); n-Butylesters (S = 0,76) und des n-Octylesters (S = 0,74).

d) Analog gelingen auch die Herstellungen der Phenylester und die Herstellung des 1,5-Diamino-4-(4-phenoxy-carbonyl-phenylmercapto)-anthrachinons aus den entsprechenden Mercaptobenzoesäurephenylestern. Die Farbstoffe haben Ordnungsgrade S von 0,76 bwz. 0,77, gemessen in den in den Beispielen 1b oder 1c genannten Flüssigkristallmischungen.

Beispiel 15

a) Verfahrt man analog Beispiel 3 und verwendet statt des 4-tert.-Butyl-thiophenols 17,8 g 4-Trifluormethyl-thiophenol, so erhält man 12,0 g 1-Amino-4,5,8-tri-(4-trifluormethyl-phenylmercapto)-anthrachinon entsprechend einer Ausbeute von 53% der Theorie.

Der Farbton des an Kieselgel adsorbierten Farbstoffs ist ein Violett mit der Indicator Number 12 (CIHIC).

b) In den in Beispiel 1b oder 1c genannten Flüssigkristallmischungen gelöst zeigt der mit violetter Farbelösliche Farbstoff einen Ordnungsgrad S von 0,76.

c) Ganz analog gelingt auch die Umsetzung mit dem m-Trifluormethylthiophenol. Der ebenfalls violette Farbstoff hat einen Ordnungsgrad S von 0,75.

Beispiel 16

a) Verfährt man analog Beispiel 2 und verwendet statt der dort eingesetzten Anthrachinonkomponente die gleiche Menge 1-Amino-4,8-dichlor-anthrachinon und statt des 4-Chlor-thiophenols 14,6 g 4-Fluorthiophenol, so erhält man 15,1 g 1-Amino-4,8-di-(4-fluor-phenylmercapto)-anthrachinon, entsprechend einer Ausbeute von 61% der Theorie.

Der Farbton des an Kieselgel adsorbierten Farbstoffs ist ein rotstichiges Violett mit der Indicator Number 10 bis 11 (CIHIC).

b) In den in Beispiel 1b oder 1c genannten Flüssigkristallmischungen gelöst zeigt der mit rotvioletter Farbe lösliche Farbstoff einen Ordnungsgrad S von 0,79.

c) Ganz entsprechend gelingt auch die Umsetzung mit dem m-Fluorthiophenol. Der ebenfalls rotviolette Farbstoff besitzt einen Ordnungsgrad S von 0,77.

Beispiel 17

a) Verfährt man analog Beispiel 2 und verwendet statt der dort eingesetzten Anthrachinonkomponente die gleiche Menge 1-Amino-4,8-dichlor-anthrachinon und statt des 4-Chlor-thiophenols 21,2 g 4-Mercaptodiphenyl, so erhält man 19,5 g 1-Amino-4,8-di-(4-phenyl-phenylmercapto)-anthrachinon entsprechend einer Ausbeute von 64% der Theorie.

Der Farbton des an Kieselgel adsorbierten Farbstoffs ist ein rotstichiges Violett mit der Indicator Number 10 bis 11 (CIHIC).

b) In den in Beispiel 1b oder 1c genannten Flüssigkristallmischungen gelöst zeigt der mit rotvioletter Farbe lösliche Farbstoff einen Ordnungsgrad S von 0,80.

c) Ganz entsprechend gelingt auch die Umsetzung mit dem m-Phenylthiophenol. Der ebenfalls rotviolette Farbstoff besitzt einen Ordnungsgrad S von 0,78.

d) Ganz entsprechend gelingt auch die Umsetzung mit p-Cylcohexyl-thiophenol. Der ebenfalls rotviolette Farbstoff besitzt einen Ordnungsgrad S von 0,78 gemessen in den in den Beispielen 1b oder 1c genannten Flüssigkristallmischungen.

Beispiel 18

5,9 g 1-Amino-5,8-dichlor-anthrachinon, 5,6 g trockenes Kaliumcarbonat und 7,2 g 6-Mercapto-1,2,3,4-tetrahydro-naphthalin werden in 50 ccm N-Methyl-pyrrolidon unter Stickstoff so lange auf 80°C erhitzt, bis das Ausgangsmaterial restlos umgesetzt ist. Dann verdünnt man das Reaktionsgemisch bei 80°C mit 50 ccm Methanol, saugt die ausgefallenen Kristalle nach Erkalten ab, wäscht sie mit Methanol und Wasser und trocknet bei 60°C.

Das erhaltene Produktgemisch enthält vor allem 1-Amino-4,5,8-tri-(1,2,3,4-tetrahydro-6-naphthylmercapto)-anthrachinon, ein rotstichiges Blau nahe der Indicator-Number 13 (CIHIC) und 1-Amino-5,8-di-(1,2-3,4-tetrahydro-6-naphthylmercapto)-anthrachinon, ein blaustichiges Rosa nahe der Indicator-Number 51. Die beiden Farbstoffe können durch Chromatographie an Silicagel getrennt werden. Der blaue Farbstoff hat einen Ordnungsgrad S von 0,78, der rote von 0,76, gemessen in der in den Beispielen 1b oder 1c genannten Flüssigkristallmischungen.

Beispiel 19

(a) 6 g 1-Hydroxy-5,8-dichlor-anthrachinon, 5,6 g trockenes Kaliumcarbonat, 7,2 g 6-Mercapto-1,2,3,4-tetrahydronaphthalin und 50 ccm N-Methyl-pyrrolidon erhitzt man unter Stickstoff auf 80°C, bis das Ausgangsmaterial völlig umgesetzt ist. Danach verdünnt man das Reaktionsgemisch bei 70°C mit 50 ccm Methanol, saugt das kristalline Produkt nach Abkühlen ab, wäscht es mit Methanol und Wasser und trocknet es bei 60°C. Nach Umkristallisation aus n-Butanol erhält man 6,2 g, entspr. 55% d. Th. des roten 1-Hydroxy-5,8-di-(1,2,3,4-tetrahydro-6-naphthylmercapto)-anthrachinons.

Der Farbton des in Kieselgel adsorbierten Farbstoffs ist ein Blaustichiges Rosa mit der Indicator-Number 51 (CIHIC).

b) In den in den Beispielen 1b oder 1c genannten Flüssigkristallmischungen gelöst zeigt der mit roter Farbe lösliche Farbstoff einen Ordnungsgrad S von 0,75.

Ganz entsprechend wie in den vorhergehenden Beispielen beschrieben werden auch die Mercaptane R—SH (s. Tab. 4) mit den Anthrachinonzwischenprodukten der Formeln *1* bis *12* (X=Cl/$NO_2$) zu den in der folgenden Tabelle 4 beschriebenen Farbstoffen (*13* bis *24*) umgesetzt.

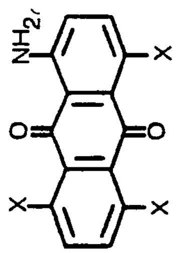

X = Cl *1*

X = SR *13*

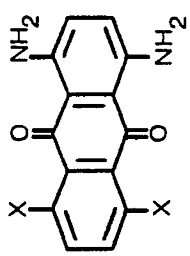

*3* *15*

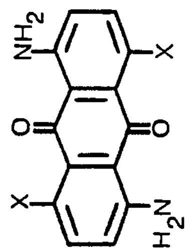

*4* *16*

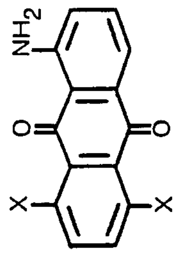

*5* *17*

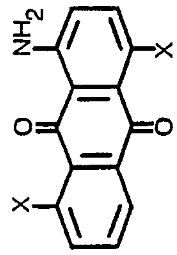

*6* *18*

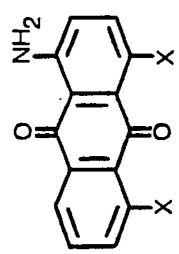

X = Cl *7*

X = SR *19*

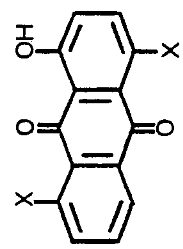

*8* *20*

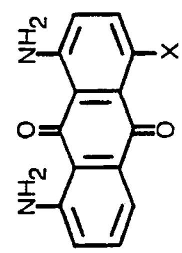

*9* *21*

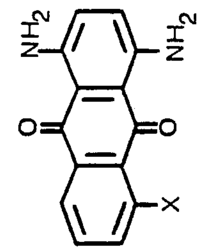

*10* *22*

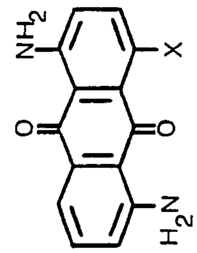

*11* *23*

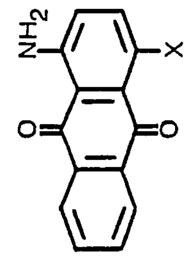

*12* *24*

TABELLE 4

Ordnungsgrade S der Farbstoffe der Formeln *13* bis *24*

Farbstoff der Formel:

| R | 13 | 15 | 16 | 17 | 18 | 19 | 20 | 21 | 22 | 23 | 24 |
|---|---|---|---|---|---|---|---|---|---|---|---|
| 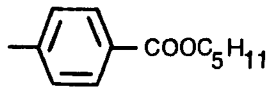 | 0,79 | 0,77 | 0,80 | | 0,79 | 0,78 | 0,75 | 0,76 | 0,75 | 0,74 | 0,72 |
| 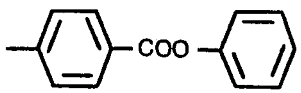 | 0,79 | | 0,81 | | 0,80 | 0,78 | 0,75 | 0,77 | 0,78 | | 0,73 |
| 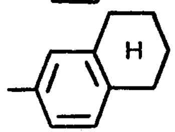 | | 0,79 | 0,80 | | 0,80 | 0,77 | 0,75 | 0,75 | 0,75 | | 0,75 |
| 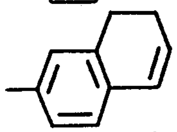 | 0,77 | | 0,78 | | | | | 0,74 | 0,75 | 0,75 | 0,74 |
| 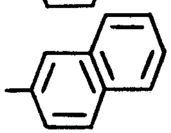 | 0,80 | 0,80 | 0,79 | 0,77 | 0,81 | 0,79 | 0,77 | 0,76 | 0,75 | 0,76 | 0,76 |
| 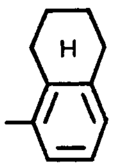 | 0,75 | | 0,74 | | 0,76 | 0,77 | 0,74 | | 0,74 | | 0,73 |
| 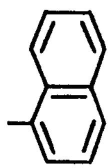 | 0,76 | 0,78 | 0,76 | | 0,77 | 0,77 | 0,74 | | 0,75 | 0,74 | 0,71 |
| 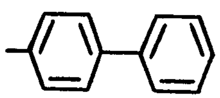 | 0,81 | 0,81 | | 0,79 | | 0,78 | 0,76 | 0,77 | 0,76 | 0,77 | 0,75 |

TABELLE 4 (Fortsetzung)

Farbstoff der Formel:

| R | 13 | 15 | 16 | 17 | 18 | 19 | 20 | 21 | 22 | 23 | 24 |
|---|---|---|---|---|---|---|---|---|---|---|---|
| 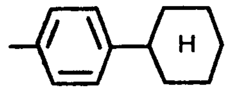 | 0,79 | | 0,79 | 0,78 | | 0,77 | 0,75 | 0,77 | | | 0,74 |
| 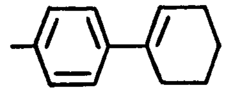 | 0,78 | | | 0,78 | 0,78 | | | | | 0,76 | |
| 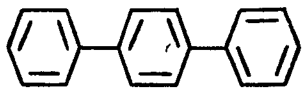 | | 0,79 | | 0,78 | 0,79 | 0,79 | 0,76 | 0,78 | 0,77 | 0,78 | 0,76 |
| 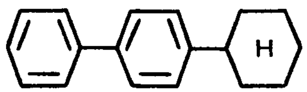 | 0,78 | | 0,77 | 0,77 | 0,77 | 0,78 | 0,75 | 0,77 | | | 0,76 |
| 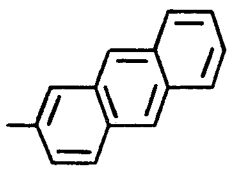 | 0,78 | 0,78 | | 0,78 | 0,78 | 0,78 | 0,77 | 0,78 | | | 0,75 |
| 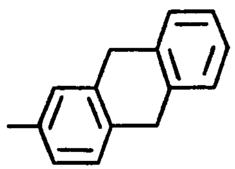 | | | | 0,77 | | | | | | 0,77 | |
| 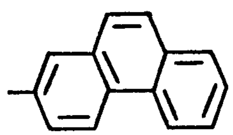 | 0,77 | | | 0,78 | | 0,78 | | | 0,76 | | 0,74 |
| 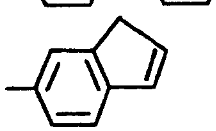 | 0,76 | | | | | | 0,76 | | | | |
| 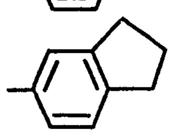 | 0,78 | 0,77 | | 0,78 | 0,79 | 0,79 | | 0,79 | 0,77 | 0,78 | 0,74 |

TABELLE 4 (Fortsetzung)

Farbstoff der Formel:

| R | 13 | 15 | 16 | 17 | 18 | 19 | 20 | 21 | 22 | 23 | 24 |
|---|---|---|---|---|---|---|---|---|---|---|---|
| 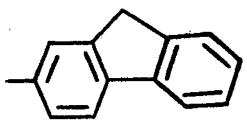 | 0,77 | | 0,77 | | | 0,79 | | 0,78 | | | |
| 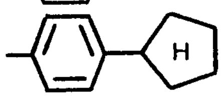 | 0,79 | | 0,79 | 0,79 | 0,78 | 0,77 | 0,76 | 0,77 | 0,76 | | 0,75 |

Beispiel 20

a) 5,9-g 1-Amino-5,8-dichloranthrachinon, 5,6 g trockenes Kaliumcarbonat, 5,2 g 2-Mercaptothiophen und 50 ccm N-Methyl-pyrrolidon erhitzt man unter Stickstoff auf 80°C bis das Ausgangsmaterial völlig umgesetzt ist. Danach verdünnt man das Reaktionsgemisch bei 70°C mit 50 ccm Methanol, saugt das Produkt nach dem Abkühlen ab, wäscht es mit Methanol und Wasser und trocknet es bei 60°C. Man erhält 6,1 g, entspr. 66% d. Th. 1-Amino-5,8-di-(2-thienylmercapto)-anthrachinon.

Der Farbton des an Kieselgel adsorbierten Farbstoffs ist ein blaustichiges Rosa mit der Indikator-Number 50—51 (CIHIC).

b) In den in den Biespielen 1b oder 1c genannten Flüssigkristallmischungen gelöst zeigt der mit roter Farbe lösliche Farbstoff einen Ordnungsgrad S von 0,78. Ähnlich gute Ordnungsgrade findet man auch in anderen, z.B. den auf den Seiten 25—29 beschriebenen Flüssigkristallmischungen.

Ganz entsprechend wie in den vorhergehenden Beispeilen beschrieben werden auch die Mercaptane R—SH (s. Tab. 5) mit den Anthrachinonzwischenprodukten der Formeln *1* bis *12* (X =$Cl/NO_2$) zu den in der Tabelle 5 beschriebenen Farbstoffen 13 bis 24 umgesetzt.

TABELLE 5

Ordnungsgrade S der Farbstoffe der Formeln 13 bis 24

Farbstoffe der Formel:

| R | 13 | 15 | 16 | 17 | 18 | 19 | 20 | 21 | 22 | 23 | 24 |
|---|---|---|---|---|---|---|---|---|---|---|---|
| 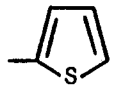 | 0,78 | 0,77 | 0,81 | 0,80 | | 0,79 | 0,74 | 0,77 | | | 0,73 |
| 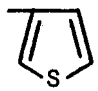 | 0,79 | 0,78 | 0,80 | 0,79 | 0,80 | | 0,75 | | 0,78 | | 0,74 |
| 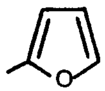 | 0,76 | | | 0,79 | | | | | | | 0,75 |
| 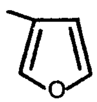 | 0,76 | | 0,80 | | | | | | | 0,75 | |
| 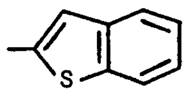 | 0,75 | | 0,76 | | | | 0,76 | | | | 0,76 |
| 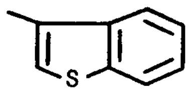 | 0,77 | 0,76 | | | 0,78 | | 0,77 | | 0,77 | | |
| 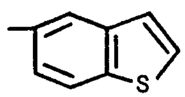 | 0,78 | 0,77 | | | | | | | | 0,76 | 0,75 |
| 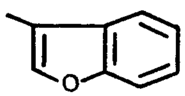 | | | 0,77 | | | | | | | | 0,76 |
| 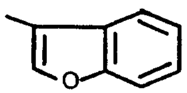 | 0,78 | 0,77 | | | | | 0,77 | | | | |
| 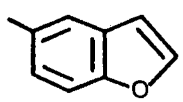 | | 0,78 | | | 0,79 | | | | | | 0,76 |

Tabelle 5 (Fortsetzung)

Farbstoff der Formel:

| R | 13 | 15 | 16 | 17 | 18 | 19 | 20 | 21 | 22 | 23 | 24 |
|---|---|---|---|---|---|---|---|---|---|---|---|
| 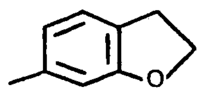 | 0,77 | | 0,79 | 0,80 | 0,78 | 0,78 | 0,76 | 0,78 | | | 0,75 |
| 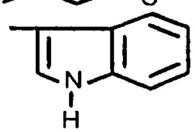 | 0,76 | 0,76 | | | 0,77 | | | | 0,77 | 0,76 | 0,74 |
| 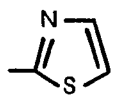 | | 0,77 | | | | 0,76 | | | 0,78 | | 0,76 |
| 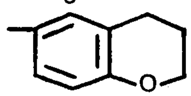 | 0,76 | 0,77 | | 0,79 | 0,78 | 0,77 | 0,75 | 0,77 | | 0,76 | 0,74 |

**Patentansprüche**

1. Dichroitisches Material, vorzugsweise in Form flüssigkristalliner Phasen, enthaltend mindestens einen Anthrachinonfarbstoff der Formel

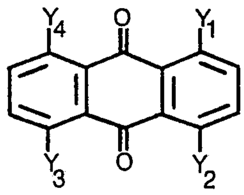

(I)

in der
$Y_1$, $Y_2$, $Y_3$, $Y_4$ für folgende Viererkombinationen stehen:

| $Y_1$ | $Y_2$ | $Y_3$ | $Y_4$ |
|---|---|---|---|
| S-Ar | S-Ar | S-Ar | $NH_2$ |
| S-Ar | S-Ar | S-Ar | OH |
| S-Ar | S-Ar | S-Ar | Hal |
| S-Ar | S-Ar | $NH_2$ | $NH_2$ |
| S-Ar | $NH_2$ | $NH_2$ | S-Ar |
| $S-Ar_2$ | $NH_2$ | $S-Ar_2$ | $NH_2$ |
| S-Ar | S-Ar | $NH_2$ | OH |
| S-Ar | $NH_2$ | OH | S-Ar |
| S-Ar | $NH_2$ | S-Ar | OH |
| S-Ar | S-Ar | $NH_2$ | Hal |
| S-Ar | $NH_2$ | Hal | S-Ar |
| S-Ar | $NH_2$ | S-Ar | Hal |
| S-Ar | S-Ar | $NH_2$ | $NO_2$ |
| S-Ar | $NH_2$ | $NO_2$ | S-Ar |
| S-Ar | $NH_2$ | S-Ar | $NO_2$ |
| S-Ar | S-Ar | $NH_2$ | H |
| S-Ar | $NH_2$ | H | S-Ar |
| S-Ar | $NH_2$ | S-Ar | H |
| S-Ar | S-Ar | OH | OH |

| $Y_1$ | $Y_2$ | $Y_3$ | $Y_4$ |
|---|---|---|---|
| S-Ar | OH | OH | S-Ar |
| S-Ar | OH | S-Ar | OH |
| S-Ar | S-Ar | OH | Hal |
| S-Ar | OH | S-Ar | Hal |
| S-Ar | S-Ar | OH | H |
| S-Ar | OH | H | S-Ar |
| S-Ar | OH | S-Ar | H |
| S-AR | S-Ar | Hal | Hal |
| S-Ar | Hal | S-Ar | Hal |
| S-Ar | S-Ar | Hal | H |
| S-Ar | Hal | H | S-Ar |
| S-Ar | Hal | S-Ar | H |
| S-Ar | S-Ar | $NO_2$ | H |
| S-Ar | $NO_2$ | S-Ar | H |
| S-Ar | $NH_2$ | $NH_2$ | $NH_2$ |
| S-Ar | $NH_2$ | $NH_2$ | OH |
| S-Ar | OH | $NH_2$ | $NH_2$ |
| S-Ar | $NH_2$ | OH | $NH_2$ |
| S-Ar | $NH_2$ | $NH_2$ | Hal |
| S-Ar | Hal | $NH_2$ | $NH_2$ |
| S-Ar | $NH_2$ | Hal | $NH_2$ |
| S-Ar | $NH_2$ | $NH_2$ | $NO_2$ |
| S-Ar | $NO_2$ | $NH_2$ | $NH_2$ |
| S-Ar | $NH_2$ | $NO_2$ | $NH_2$ |
| S-Ar | $NH_2$ | $NH_2$ | H |
| S-Ar | H | $NH_2$ | $NH_2$ |
| S-Ar | $NH_2$ | H | $NH_2$ |
| S-Ar | $NH_2$ | OH | OH |
| S-Ar | OH | OH | $NH_2$ |
| S-Ar | OH | $NH_2$ | OH |
| S-Ar | $NH_2$ | OH | Hal |
| S-Ar | Hal | OH | $NH_2$ |

| $Y_1$ | $Y_2$ | $Y_3$ | $Y_4$ |
|---|---|---|---|
| S-Ar | $NH_2$ | Hal | OH |
| S-Ar | OH | $NH_2$ | Hal |
| S-Ar | OH | Hal | $NH_2$ |
| S-Ar | Hal | $NH_2$ | OH |
| S-Ar | $NO_2$ | OH | $NH_2$ |
| S-Ar | $NH_2$ | $NO_2$ | OH |
| S-Ar | OH | $NO_2$ | $NH_2$ |
| S-Ar | $NO_2$ | $NH_2$ | OH |
| S-Ar | $NH_2$ | OH | H |
| S-Ar | H | OH | $NH_2$ |
| S-Ar | $NH_2$ | H | OH |
| S-Ar | OH | $NH_2$ | H |
| S-Ar | OH | H | $NH_2$ |
| S-Ar | H | $NH_2$ | OH |
| S-Ar | $NH_2$ | Hal | Hal |
| S-Ar | Hal | Hal | $NH_2$ |
| S-Ar | Hal | $NH_2$ | Hal |
| S-Ar | $NO_2$ | Hal | $NH_2$ |
| S-Ar | $NH_2$ | $NO_2$ | Hal |
| S-Ar | Hal | $NO_2$ | $NH_2$ |
| S-Ar | $NO_2$ | $NH_2$ | Hal |
| S-Ar | $NH_2$ | Hal | H |
| S-Ar | H | Hal | $NH_2$ |
| S-Ar | $NH_2$ | H | Hal |
| S-Ar | Hal | $NH_2$ | H |
| S-Ar | Hal | H | $NH_2$ |
| S-Ar | H | $NH_2$ | Hal |
| S-Ar | $NH_2$ | H | $NO_2$ |
| S-Ar | $NO_2$ | $NH_2$ | H |
| S-Ar | H | $NH_2$ | $NO_2$ |
| $S-Ar_2$ | $NH_2$ | H | H |
| S-Ar | H | H | $NH_2$ |
| S-Ar | H | $NH_2$ | H |
| S-Ar | OH | $NO_2$ | OH |

| $Y_1$ | $Y_2$ | $Y_3$ | $Y_4$ |
|---|---|---|---|
| S-Ar | OH | OH | H |
| S-Ar | H | OH | OH |
| S-Ar | OH | H | OH |
| S-Ar | OH | $NO_2$ | Hal |
| S-Ar | Hal | $NO_2$ | OH |
| S-Ar | OH | Hal | H |
| S-Ar | H | Hal | OH |
| S-Ar | OH | H | Hal |
| S-Ar | Hal | OH | H |
| S-Ar | Hal | H | OH |
| S-Ar | H | OH | Hal |
| S-Ar | OH | $NO_2$ | H |
| S-Ar | $NO_2$ | OH | H |
| S-Ar | OH | H | H |
| S-Ar | H | OH | H |
| S-Ar | Hal | $NO_2$ | Hal |
| S-Ar | Hal | $NO_2$ | H |
| S-Ar | Hal | H | H |
| S-Ar | H | Hal | H |

Ar, $Ar_2$ einen Phenyl-, Pyridyl-, Imidazolyl(2)-, 1,2,4-Triazolyl(3)-, Thienyl, Naphthyl-, Dihydronaphthyl-, Tetrahydronaphthyl-, Indanyl-, Indenyl-, Indolyl, Benzofuranyl-, Chromanyl-, Chinolyl-, Anthracenyl-, Carbazolyl-, Dibenzofuranyl-, Dihydroanthracenyl-, Fluorenyl-, Acenaphthenyl-, Phenanthrenyl-, Biphenylyl-, Terphenylyl-, 4-Cyclohexylphenyl-, 4-Cyclopentyl-phenyl-, 4-Cyclohexylbiphenyl und 4-(4-Phenyl-cyclohexyl)-phenyl- Rest bezeichnen, wobei die genannten Reste durch Alkyl, Cycloalkyl, Aralkyl, Trifluormethyl, Aryl, Halogen, Alkoxy oder —COOT substituiert sein können, und wobei für den Fall, daß $Ar_2$ Phenyl ist, dieser Rest substituiert sein muß,

Hal, Chlor, Brom oder Fluor bezeichnet und

T für einen organischen Rest steht.

2. Dichroitisches Material gemäß Anspruch 1, enthaltend mindestens einen Anthrachinonfarbstoff der Formel (I), bei der Ar, $Ar_2$ einen Phenyl-, Naphthyl-, Indanyl- oder Tetrahydronaphthyl-Rest bezeichnen.

3. Dichroitisches Material gemäß Anspruch 1 enthaltend mindestens einen Anthrachinonfarbstoff der Formel (I), bei der Ar, $Ar_2$ einen gegebenenfalls durch $C_1$—$C_4$-Alkyl, insbesondere Methyl und tert.- Butyl, Halogen, insbesondere Fluor und Chlor oder —COOT substituierten Aryl-, insbesondere Phenylrest, bezeichnen.

4. Dichroitisches Material gemäß Ansprüchen 1—3 enthaltend 0,01 bis 30 Gew.-%, vorzugsweise 0,1 bis 10 Gew.-%, an Anchrachinonfarbstoff der Formel (I).

**Revendications**

1. Matière dichroïque, de préférence sous forme de phases à cristaux liquides, contenant au moins un colorant anthraquinonique de formule

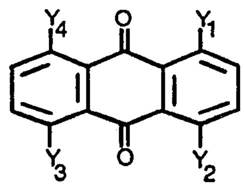

(I)

dans laquelle

$Y_1$, $Y_2$, $T_3$ et $Y_4$ représentent les combinaisons suivantes de quatre substituants:

| $Y_1$ | $Y_2$ | $Y_3$ | $Y_4$ |
|---|---|---|---|
| S-Ar | S-Ar | S-Ar | $NH_2$ |
| S-Ar | S-Ar | S-Ar | OH |
| S-Ar | S-Ar | S-Ar | Hal |
| S-Ar | S-Ar | $NH_2$ | $NH_2$ |
| S-Ar | $NH_2$ | $NH_2$ | S-Ar |
| $S-Ar_2$ | $NH_2$ | $S-Ar_2$ | $NH_2$ |
| S-Ar | S-Ar | $NH_2$ | OH |
| S-Ar | $NH_2$ | OH | S-Ar |
| S-Ar | $NH_2$ | S-Ar | OH |
| S-Ar | S-Ar | $NH_2$ | Hal |
| S-Ar | $NH_2$ | Hal | S-Ar |
| S-Ar | $NH_2$ | S-Ar | Hal |
| S-Ar | S-Ar | $NH_2$ | $NO_2$ |
| S-Ar | $NH_2$ | $NO_2$ | S-Ar |
| S-Ar | $NH_2$ | S-Ar | $NO_2$ |
| S-Ar | S-Ar | $NH_2$ | H |
| S-Ar | $NH_2$ | H | S-Ar |
| S-Ar | $NH_2$ | S-Ar | H |
| S-Ar | S-Ar | OH | OH |

| $Y_1$ | $Y_2$ | $Y_3$ | $Y_4$ |
|---|---|---|---|
| S-Ar | OH | OH | S-Ar |
| S-Ar | OH | S-Ar | OH |
| S-Ar | S-Ar | OH | Hal |
| S-Ar | OH | S-Ar | Hal |
| S-Ar | S-Ar | OH | H |
| S-Ar | OH | H | S-Ar |
| S-Ar | OH | S-Ar | H |
| S-AR | S-Ar | Hal | Hal |
| S-Ar | Hal | S-Ar | Hal |
| S-Ar | S-Ar | Hal | H |
| S-Ar | Hal | H | S-Ar |
| S-Ar | Hal | S-Ar | H |
| S-Ar | S-Ar | $NO_2$ | H |
| S-Ar | $NO_2$ | S-Ar | H |
| S-Ar | $NH_2$ | $NH_2$ | $NH_2$ |
| S-Ar | $NH_2$ | $NH_2$ | OH |
| S-Ar | OH | $NH_2$ | $NH_2$ |
| S-Ar | $NH_2$ | OH | $NH_2$ |
| S-Ar | $NH_2$ | $NH_2$ | Hal |
| S-Ar | Hal | $NH_2$ | $NH_2$ |
| S-Ar | $NH_2$ | Hal | $NH_2$ |
| S-Ar | $NH_2$ | $NH_2$ | $NO_2$ |
| S-Ar | $NO_2$ | $NH_2$ | $NH_2$ |
| S-Ar | $NH_2$ | $NO_2$ | $NH_2$ |
| S-Ar | $NH_2$ | $NH_2$ | H |
| S-Ar | H | $NH_2$ | $NH_2$ |
| S-Ar | $NH_2$ | H | $NH_2$ |
| S-Ar | $NH_2$ | OH | OH |
| S-Ar | OH | OH | $NH_2$ |
| S-Ar | OH | $NH_2$ | OH |
| S-Ar | $NH_2$ | OH | Hal |
| S-Ar | Hal | OH | $NH_2$ |

| $Y_1$ | $Y_2$ | $Y_3$ | $Y_4$ |
|---|---|---|---|
| S-Ar | $NH_2$ | Hal | OH |
| S-Ar | OH | $NH_2$ | Hal |
| S-Ar | OH | Hal | $NH_2$ |
| S-Ar | Hal | $NH_2$ | OH |
| S-Ar | $NO_2$ | OH | $NH_2$ |
| S-Ar | $NH_2$ | $NO_2$ | OH |
| S-Ar | OH | $NO_2$ | $NH_2$ |
| S-Ar | $NO_2$ | $NH_2$ | OH |
| S-Ar | $NH_2$ | OH | H |
| S-Ar | H | OH | $NH_2$ |
| S-Ar | $NH_2$ | H | OH |
| S-Ar | OH | $NH_2$ | H |
| S-Ar | OH | H | $NH_2$ |
| S-Ar | H | $NH_2$ | OH |
| S-Ar | $NH_2$ | Hal | Hal |
| S-Ar | Hal | Hal | $NH_2$ |
| S-Ar | Hal | $NH_2$ | Hal |
| S-Ar | $NO_2$ | Hal | $NH_2$ |
| S-Ar | $NH_2$ | $NO_2$ | Hal |
| S-Ar | Hal | $NO_2$ | $NH_2$ |
| S-Ar | $NO_2$ | $NH_2$ | Hal |
| S-Ar | $NH_2$ | Hal | H |
| S-Ar | H | Hal | $NH_2$ |
| S-Ar | $NH_2$ | H | Hal |
| S-Ar | Hal | $NH_2$ | H |
| S-Ar | Hal | H | $NH_2$ |
| S-Ar | H | $NH_2$ | Hal |
| S-Ar | $NH_2$ | H | $NO_2$ |
| S-Ar | $NO_2$ | $NH_2$ | H |
| S-Ar | H | $NH_2$ | $NO_2$ |
| $S-Ar_2$ | $NH_2$ | H | H |
| S-Ar | H | H | $NH_2$ |
| S-Ar | H | $NH_2$ | H |
| S-Ar | OH | $NO_2$ | OH |

| $Y_1$ | $Y_2$ | $Y_3$ | $Y_4$ |
|---|---|---|---|
| S-Ar | OH | OH | H |
| S-Ar | H | OH | OH |
| S-Ar | OH | H | OH |
| S-Ar | OH | $NO_2$ | Hal |
| S-Ar | Hal | $NO_2$ | OH |
| S-Ar | OH | Hal | H |
| S-Ar | H | Hal | OH |
| S-Ar | OH | H | Hal |
| S-Ar | Hal | OH | H |
| S-Ar | Hal | H | OH |
| S-Ar | H | OH | Hal |
| S-Ar | OH | $NO_2$ | H |
| S-Ar | $NO_2$ | OH | H |
| S-Ar | OH | H | H |
| S-Ar | H | OH | H |
| S-Ar | Hal | $NO_2$ | Hal |
| S-Ar | Hal | $NO_2$ | H |
| S-Ar | Hal | H | H |
| S-Ar | H | Hal | H |

dans lesquels

Ar, $Ar_2$ représentent un reste phényle, un reste pyridyle, un reste imidazolyle(2), un reste 1,2-triazolyle (3), un reste thiényle, un reste naphtyle, un reste dihydronaphtyle, un reste tétrahydronaphtyle, un reste indanyle, un reste indényle, un reste indolyle, un reste benzofurannyle, un reste chromanyle, un reste quinoléyle, un reste anthracényle, un reste carbazolyle, un reste dibenzofurannyle, un reste dihydroanthracényle, un reste fluorényle, un reste acénaphtényle, un reste phénanthrényle, un reste biphénylyle, un reste terphénylyle, un reste 4-cyclohexylphényle, un reste 4-cyclopentyl-phényle, un reste 4-cyclohexylbiphénlyle et un reste 4-(4-phényl-cyclohexyl)-phényle, les restes cités pouvant être substitués par alkyle, cycloalkyle, arylalkyle, trifluorométhyle, aryle, halgoène, alcoxy ou —COOT et dans lesquels, lorsque $Ar_2$ est un reste phényle, ce reste doit être substituè,

Hal représente le chlore, le brome ou le fluor et

T représente un reste organique.

2. Matière dichroïque selon la revendication 1, contenant au moins un colorant anthraquinonique de formule (I), dans laquelle Ar, $Ar_2$ représentent un reste phényle, un reste naphtyle, un reste indanyle ou un reste tétrahydronaphtyle.

3. Matière dichroïque selon la revendication 1, contenant au moins un colorant anthraquinonique de formule (I), dans laquelle Ar, $Ar_2$ représentent un reste aryle, en particulier un reste phényle, éventuellement substitué par alkyle en $C_1$—$C_4$, en particulier méthyle et tert-butyle, halogène, en particulier fluor et chlore, ou COOT.

4. Matière dichroïque selon les revendications 1—3, contenant 0,01 à 30% en poids, de préférence 0,1 à 10% en poids, de colorant anthraquinonique de formule (I).

## Claims

1. Dichroic material, preferably in the form of liquid crystal phases, containing at least one anthraquinone dyestuff of the formula

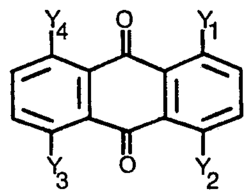

(I)

in which

$Y_1$, $Y_2$, $Y_3$ and $Y_4$ represent the following combinations of four:

| $Y_1$ | $Y_2$ | $Y_3$ | $Y_4$ |
|---|---|---|---|
| S-Ar | S-Ar | S-Ar | $NH_2$ |
| S-Ar | S-Ar | S-Ar | OH |
| S-Ar | S-Ar | S-Ar | Hal |
| S-Ar | S-Ar | $NH_2$ | $NH_2$ |
| S-Ar | $NH_2$ | $NH_2$ | S-Ar |
| $S\text{-}Ar_2$ | $NH_2$ | $S\text{-}Ar_2$ | $NH_2$ |
| S-Ar | S-Ar | $NH_2$ | OH |
| S-Ar | $NH_2$ | OH | S-Ar |
| S-Ar | $NH_2$ | S-Ar | OH |
| S-Ar | S-Ar | $NH_2$ | Hal |
| S-Ar | $NH_2$ | Hal | S-Ar |
| S-Ar | $NH_2$ | S-Ar | Hal |
| S-Ar | S-Ar | $NH_2$ | $NO_2$ |
| S-Ar | $NH_2$ | $NO_2$ | S-Ar |
| S-Ar | $NH_2$ | S-Ar | $NO_2$ |
| S-Ar | S-Ar | $NH_2$ | H |
| S-Ar | $NH_2$ | H | S-Ar |
| S-Ar | $NH_2$ | S-Ar | H |
| S-Ar | S-Ar | OH | OH |

| $Y_1$ | $Y_2$ | $Y_3$ | $Y_4$ |
|---|---|---|---|
| S-Ar | OH | OH | S-Ar |
| S-Ar | OH | S-Ar | OH |
| S-Ar | S-Ar | OH | Hal |
| S-Ar | OH | S-Ar | Hal |
| S-Ar | S-Ar | OH | H |
| S-Ar | OH | H | S-Ar |
| S-Ar | OH | S-Ar | H |
| S-AR | S-Ar | Hal | Hal |
| S-Ar | Hal | S-Ar | Hal |
| S-Ar | S-Ar | Hal | H |
| S-Ar | Hal | H | S-Ar |
| S-Ar | Hal | S-Ar | H |
| S-Ar | S-Ar | $NO_2$ | H |
| S-Ar | $NO_2$ | S-Ar | H |
| S-Ar | $NH_2$ | $NH_2$ | $NH_2$ |
| S-Ar | $NH_2$ | $NH_2$ | OH |
| S-Ar | OH | $NH_2$ | $NH_2$ |
| S-Ar | $NH_2$ | OH | $NH_2$. |
| S-Ar | $NH_2$ | $NH_2$ | Hal |
| S-Ar | Hal | $NH_2$ | $NH_2$ |
| S-Ar | $NH_2$ | Hal | $NH_2$ |
| S-Ar | $NH_2$ | $NH_2$ | $NO_2$ |
| S-Ar | $NO_2$ | $NH_2$ | $NH_2$ |
| S-Ar | $NH_2$ | $NO_2$ | $NH_2$ |
| S-Ar | $NH_2$ | $NH_2$ | H |
| S-Ar | H | $NH_2$ | $NH_2$ |
| S-Ar | $NH_2$ | H | $NH_2$ |
| S-Ar | $NH_2$ | OH | OH |
| S-Ar | OH | OH | $NH_2$ |
| S-Ar | OH | $NH_2$ | OH |
| S-Ar | $NH_2$ | OH | Hal |
| S-Ar | Hal | OH | $NH_2$ |

| $Y_1$ | $Y_2$ | $Y_3$ | $Y_4$ |
|---|---|---|---|
| S-Ar | $NH_2$ | Hal | OH |
| S-Ar | OH | $NH_2$ | Hal |
| S-Ar | OH | Hal | $NH_2$ |
| S-Ar | Hal | $NH_2$ | OH |
| S-Ar | $NO_2$ | OH | $NH_2$ |
| S-Ar | $NH_2$ | $NO_2$ | OH |
| S-Ar | OH | $NO_2$ | $NH_2$ |
| S-Ar | $NO_2$ | $NH_2$ | OH |
| S-Ar | $NH_2$ | OH | H |
| S-Ar | H | OH | $NH_2$ |
| S-Ar | $NH_2$ | H | OH |
| S-Ar | OH | $NH_2$ | H |
| S-Ar | OH | H | $NH_2$ |
| S-Ar | H | $NH_2$ | OH |
| S-Ar | $NH_2$ | Hal | Hal |
| S-Ar | Hal | Hal | $NH_2$ |
| S-Ar | Hal | $NH_2$ | Hal |
| S-Ar | $NO_2$ | Hal | $NH_2$ |
| S-Ar | $NH_2$ | $NO_2$ | Hal |
| S-Ar | Hal | $NO_2$ | $NH_2$ |
| S-Ar | $NO_2$ | $NH_2$ | Hal |
| S-Ar | $NH_2$ | Hal | H |
| S-Ar | H | Hal | $NH_2$ |
| S-Ar | $NH_2$ | H | Hal |
| S-Ar | Hal | $NH_2$ | H |
| S-Ar | Hal | H | $NH_2$ |
| S-Ar | H | $NH_2$ | Hal |
| S-Ar | $NH_2$ | H | $NO_2$ |
| S-Ar | $NO_2$ | $NH_2$ | H |
| S-Ar | H | $NH_2$ | $NO_2$ |
| $S-Ar_2$ | $NH_2$ | H | H |
| S-Ar | H | H | $NH_2$ |
| S-Ar | H | $NH_2$ | H |
| S-Ar | OH | $NO_2$ | OH |

| $Y_1$ | $Y_2$ | $Y_3$ | $Y_4$ |
|---|---|---|---|
| S-Ar | OH | OH | H |
| S-Ar | H | OH | OH |
| S-Ar | OH | H | OH |
| S-Ar | OH | $NO_2$ | Hal |
| S-Ar | Hal | $NO_2$ | OH |
| S-Ar | OH | Hal | H |
| S-Ar | H | Hal | OH |
| S-Ar | OH | H | Hal |
| S-Ar | Hal | OH | H |
| S-Ar | Hal | H | OH |
| S-Ar | H | OH | Hal |
| S-Ar | OH | $NO_2$ | H |
| S-Ar | $NO_2$ | OH | H |
| S-Ar | OH | H | H |
| S-Ar | H | OH | H |
| S-Ar | Hal | $NO_2$ | Hal |
| S-Ar | Hal | $NO_2$ | H |
| S-Ar | Hal | H | H |
| S-Ar | H | Hal | H |

Ar, $Ar_2$, designate a phenyl, pyridyl, imidazol-2-yl, 1,2,4-triazol-3-yl, thienyl, naphthyl, dihydronaphthyl, tetrahydronaphthyl, indanyl, indenyl, indolyle, benzofuranyl, chromanyl, quinolyl, anthracenyl, carbozolyl, dibenzofuranyl, dihydroanthracenyl, fluorenyl, acenaphthenyl, phenanthrenyl, biphenylyl, terphenylyl, 4-cyclohexylphenyl, 4-cyclopentylphenyl, 4-cyclohexylbiphenyl or 4-(4-phenyl-cyclohexyl)-phenyl radical, it being possible for the radicals mentioned to be substituted by alkyl, cycloalkyl, aralkyl, trifluoromethyl, aryl, halogen, alkoxy or —COOT, and, where $Ar_2$ is phenyl, this radical must be substituted,

Hal designates chlorine, bromine or fluorine and

T represents an organic radical.

2. Dichroic material according to Claim 1, containing at least one anthraquinone dyestuff of the formula (I) in which

Ar, $Ar_2$ designate a phenyl, naphthyl, indanyl or tetrahydronaphthyl radical.

3. Dichroic material according to Claim 1, containing at least one anthraquinone dyestuff of the formula (I) in which

Ar, $Ar_2$ designate an aryl radical, in particular a phenyl radical, which is optionally substituted by $C_1$—$C_4$-alkyl, in particular methyl or tert.-butyl, halogen, in particular fluorine and chlorine, or —COOT.

4. Dichroic material according to Claims 1—3, containing 0.01 to 30% by weight, preferably 0.1 to 10% by weight, of anthraquinone dyestuff of the formula (I).